# EUROPEAN PATENT SPECIFICATION

(11) **EP 3 806 542 B1**
(45) Date of publication and mention of the grant of the patent: **30.08.2023**
(21) Application number: 19821538.6
(22) Date of filing: 20.06.2019
(51) Int. Cl.: H04W 40/34, H04W 40/02, H04W 40/12, H04W 40/22, H04B 7/26, H04W 88/08

(54) **PATH CHANGING METHOD AND APPARATUS**
PFADEINSTELLUNGSVERFAHREN UND -VORRICHTUNG
PROCÉDÉ ET APPAREIL DE MODIFICATION DE CHEMIN

(30) Priority: 21.06.2018 CN 201810646810
(43) Date of publication of application: 14.04.2021
(73) Proprietor: HUAWEI TECHNOLOGIES CO., LTD., Shenzhen, Guangdong 518129 (CN)
(72) Inventor: ZHU, Yuanping, Shenzhen, Guangdong 518129 (CN); YUAN, Shitong, Shenzhen, Guangdong 518129 (CN); DAI, Mingzeng, Shenzhen, Guangdong 518129 (CN)
(74) Representative: Maiwald GmbH
(86) International application number: PCT/CN2019/092066
(87) International publication number: WO 2019/242683

(56) References cited:
- CN-A- 104 521 280
- US-A1- 2010 103 845
- US-A1- 2018 092 139
- US-B1- 8 358 577
- ZTE: "Consideration on Routing Design for IAB", 3GPP TSG-RAN WG2 Meeting #102 , R2-1807403, vol. RAN WG2, 11 May 2018 (2018-05-11), pages 1-4, XP051464646, Busan, Korea
- VIVO: "Initial consideration on dynamic route selection", 3GPP TSG-RAN WG2 Meeting #101bis R2-1804996, vol. RAN WG2, 6 April 2018 (2018-04-06), pages 1-4, XP051415791, Sanya, China
- HUAWEI: "Destination Address and Forwarding Path based Routing for IAB", 3GPP TSG-RAN WG2 Meeting#102 , R2-1808603, vol. RAN WG2, 11 May 2018 (2018-05-11), pages 1-5, XP051519996, Busan, Korea

## Description

### TECHNICAL FIELD

This application relates to the field of communications technologies, and in particular, to a path change method, an apparatus and a computer readable medium.

### BACKGROUND

In a network including an integrated access and backhaul (integrated access and backhaul, IAB for short) node, there are multi-hop and multi-connection scenarios. To be specific, a plurality of nodes (for example, a plurality of IAB nodes) may serve a terminal, and the terminal may transmit a data packet through a plurality of hops of IAB nodes. Therefore, there may be a plurality of data packet transmission paths between the terminal and a donor node (for example, an IAB donor or a donor base station). At an IAB node on a transmission path, a data packet is mainly routed in the following two manners:
Manner 1: The data packet is routed based on an identifier of a destination node and a route mapping table. To be specific, the route mapping table is configured on the IAB node, and the route mapping table includes the identifier of the destination node and an identifier of a unique next-hop node corresponding to the identifier of the destination node. The IAB node forwards the data packet to the unique next-hop node based on the identifier of the destination node and the route mapping table that are carried in the data packet.
Manner 2: The data packet is routed based on a path label. To be specific, the IAB node routes the data packet based on a determined transmission path indicated by the path label carried in the data packet.

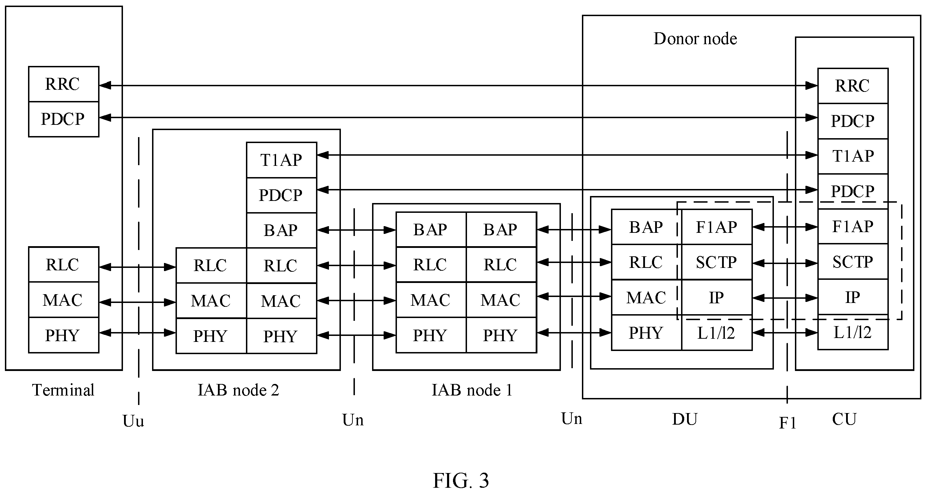

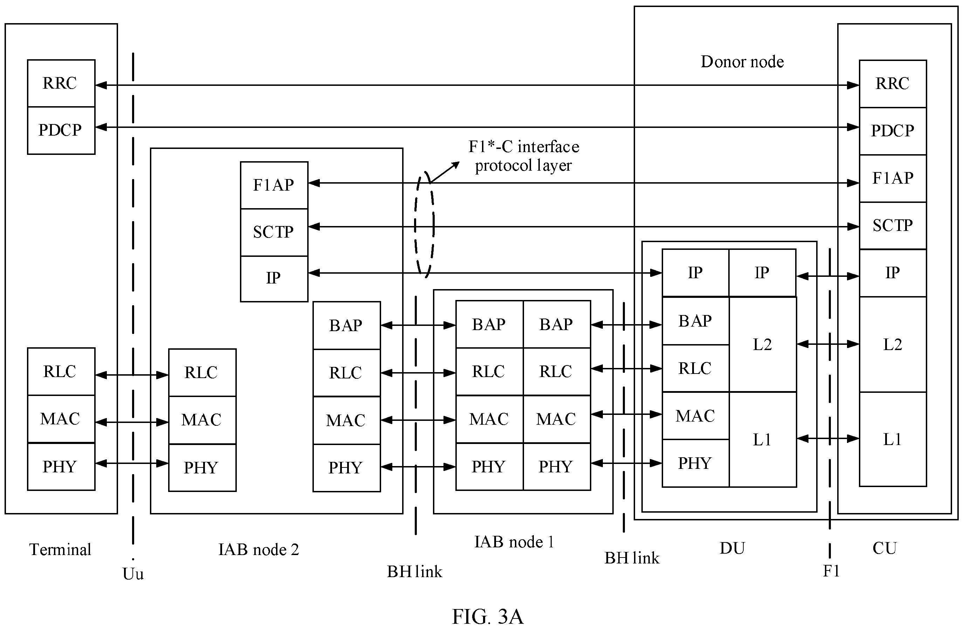

Based on the two manners, a data packet can be routed between the terminal and the donor node through only one transmission path. Even if the data packet cannot be normally transmitted on some links on the transmission path or some links on the transmission path cannot meet a transmission requirement of a service corresponding to the data packet, the IAB node does not transmit the data packet through another transmission path. Consequently, data packet transmission efficiency is limited.
US2010/103845A1 discloses in a wireless communication system 200, relay eNB 108 can communication with donor eNB 102 via relay eNB 104. Relay eNB 108 can initiate intra-cluster reselection to relay eNB 202, which communicates with the same donor eNB 102 as relay eNB 104. This can be based on a higer level of service provided by relay eNB 202, SNR over a certain threshold.
US8358577B1 discloses the communications for wireless access are initially routed over backhaul link 321 between base station 311 and RNC 330. If the forward utilization threshold is exceeded, RNC 330 instructs (408) BS 311 to initiate a backup wireless link between BS 311 and the selected donor base station. RNC 330 selects BS 313 as the donor base station, and instructs BS 313 to initiate backup wireless link 351 with BS 311.
3GPP Draft: R2-1804996, Section 2.2 discloses a dynamic route selection method. Wherein for case 2, if backhaul link quality drop below threshold, a possible solution would be that IAB link traffic being handover to another IAB link. For example in figure 3, if link quality between serving IAB 1 and serving IAB 3 becomes worse, serving IAB 1 can handover served IAB 3 traffic to IAB2 or IAB4.

### SUMMARY

Embodiments of this application provide a path change method, apparatus and computer readable medium to improve data packet transmission efficiency.

To achieve the foregoing objective, the embodiments of this application provide the following technical solutions. The subject matter of the invention is defined only by the appended set of claims. The following aspects are described for understanding.

### BRIEF DESCRIPTION OF DRAWINGS

FIG. 1 is a schematic networking diagram of IAB nodes;
FIG. 1A is a schematic diagram of nodes on a transmission path;
FIG. 2 is a schematic diagram of a hardware composition of a network node;
FIG. 3 is a schematic architectural diagram of a protocol stack;
FIG. 3A is a schematic architectural diagram of another protocol stack;
FIG. 4 is a schematic architectural diagram of another protocol stack;
FIG. 5 is a schematic architectural diagram of another protocol stack;
FIG. 5A is a schematic architectural diagram of another protocol stack;
FIG. 6 is a schematic architectural diagram of still another protocol stack;
FIG. 7 is a flowchart of a path change method;
FIG. 8 is a flowchart of a data packet processing method; and
FIG. 9 is a schematic compositional diagram of a network node.

### DESCRIPTION OF EMBODIMENTS

The following describes technical solutions in embodiments of this application with reference to the accompanying drawings in the embodiments of this application. In the descriptions of this application, "/" means "or" unless otherwise specified. For example, A/B may represent A or B. The term "and/or" in this specification describes only an association relationship between associated objects and represents that three relationships may exist. For example, A and/or B may represent the following three cases: Only A exists, both A and B exist, and only B exists. In addition, unless otherwise specified, "a plurality of" in the descriptions of this application means two or more than two. In addition, to clearly describe the technical solutions in the embodiments of this application, terms such as "first" and "second" are used in the embodiments of this application to distinguish between same items or similar items that have basically same functions and purposes. A person skilled in the art may understand that the terms such as "first" and "second" do not limit a quantity or an execution sequence, and that the terms such as "first" and "second" do not indicate a definite difference.

The technical solutions in the embodiments of this application may be applied to various data processing communications systems, such as an orthogonal frequency-division multiple access (orthogonal frequency-division multiple access, OFDMA for short) system, a single-carrier frequency division multiple access (single carrier FDMA, SC-FDMA for short) system, and other systems. The terms "system" and "network" can be interchanged with each other. The OFDMA system may implement wireless technologies such as evolved universal terrestrial radio access (evolved UTRA, E-UTRA for short) and ultra mobile broadband (ultra mobile broadband, UMB for short). The E-UTRA is an evolved version of a universal mobile telecommunications system (universal mobile telecommunications system, UMTS for short). The 3rd generation partnership project (3rd generation partnership project, 3GPP for short) uses a new version of E-UTRA in long term evolution (long term evolution, LTE for short) and various versions evolved based on LTE. A 5th generation (5th-generation, 5G for short) communications system or new radio (new radio, NR for short) is a next generation communications system under research. In addition, the communications systems may further be applicable to a future-oriented communications technology, and are all applicable to the technical solutions provided in the embodiments of this application.

A system architecture and a service scenario that are described in the embodiments of this application are intended to describe the technical solutions in the embodiments of this application more clearly, and do not constitute a limitation to the technical solutions provided in the embodiments of this application. A person of ordinary skill in the art may know that with evolution of network architectures and emergence of new service scenarios, the technical solutions provided in the embodiments of this application are also applied to a similar technical issue. In the embodiments of this application, an example in which the provided method is applied to an NR system or a 5G network is used for description. However, it should be noted that the method provided in the embodiments of this application may also be applied to another network, for example, may be applied to an evolved packet system (evolved packet system, EPS for short) network (namely, a 4th generation (4th generation, 4G for short) network). Correspondingly, when the method provided in the embodiments of this application is applied to the EPS network, a network node performing the method provided in the embodiments of this application is replaced with a network node in the EPS network. For example, when the method provided in the embodiments of this application is applied to the 5G network or the NR system, a wireless backhaul node in the following descriptions may be a wireless backhaul node in the 5G network. For example, the wireless backhaul node in the 5G network may be referred to as an IAB node, and certainly may also have another name. This is not specifically limited in the embodiments of this application. When the method provided in the embodiments of this application is applied to the EPS network, a wireless backhaul node in the following descriptions may be a wireless backhaul node in the EPS network. For example, the wireless backhaul node in the EPS network may be referred to as a relay node (relay node, RN for short). The wireless backhaul node is configured to provide a wireless backhaul service for a node (for example, a terminal) wirelessly accessing the wireless backhaul node.

With development of technologies such as virtual reality (virtual reality, VR for short), augmented reality (augmented reality, AR for short), and the internet of things, there will be more terminals in a future network, and usage of network data will also continuously increase. To adapt to the increasing quantity of terminals and the rapidly increasing usage of network data in the market, higher requirements are imposed on the capacity of a 5G network. In a hotspot area, to meet a 5G ultra-high capacity requirement, using high-frequency small cells for networking becomes more popular. High-frequency carriers have a poor propagation characteristic, are severely attenuated if blocked, and have small coverage. Therefore, a large quantity of small cells need to be densely deployed in the hotspot area. These small cells may be IAB nodes.

To design a flexible and convenient access and backhaul solution, a wireless transmission solution is applied to both an access link (access link, AL for short) and a backhaul link (backhaul link, BL for short) in an IAB scenario.

In a network including an IAB node (briefly referred to as an IAB network), the IAB node may provide a wireless access service for a terminal, and is connected to a donor node (donor node) through a wireless backhaul link to transmit service data of a user. The IAB node is connected to a core network through a wired link via the donor node (where for example, in a standalone 5G architecture, the IAB node is connected to a 5G core (5G core, 5GC for short) through a wired link via the donor node; and in a non-standalone 5G architecture, the IAB node is connected to an evolved packet core (EPC) on a control plane (control plane, CP for short) via an eNB (evolved NodeB), and is connected to the EPC on a user plane (user plane, UP for short) via the donor node and the eNB).

The IAB network supports multi-hop IAB node networking and multi-connection IAB node networking. Therefore, there may be a plurality of transmission paths between the terminal and the donor node. On a path, there is a determined hierarchical relationship between IAB nodes and between an IAB node and the donor node serving the IAB node. Each IAB node considers a node providing a backhaul service for the IAB node as a parent node. Correspondingly, the IAB node may be considered as a subnode of the parent node.

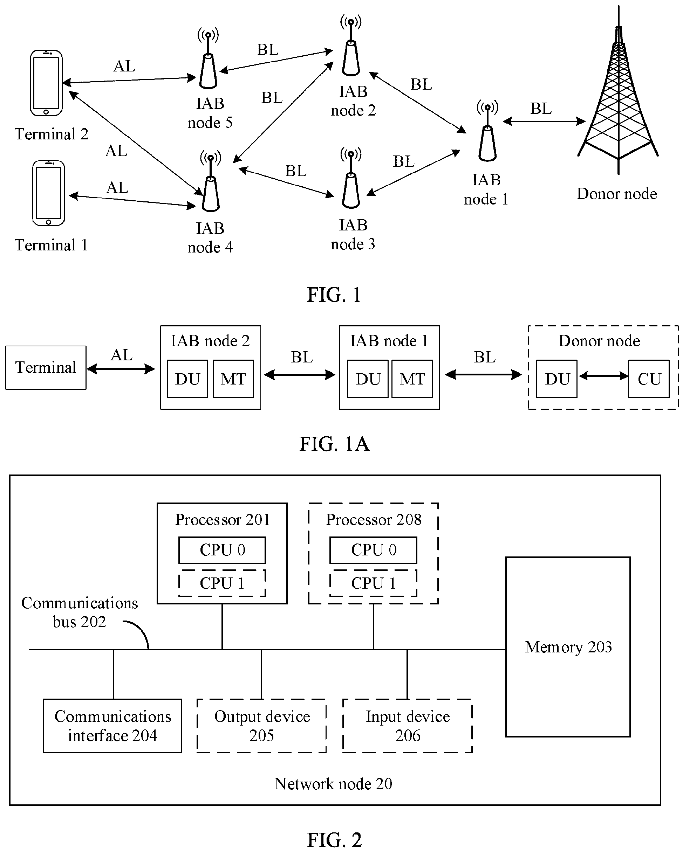

For example, referring to FIG. 1, a parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 2. An uplink data packet of a terminal may be transmitted to the donor node via one or more IAB nodes, and then is sent by the donor node to a mobile gateway device (for example, a user plane function (user plane function, UPF for short) network element in a 5G network). After the donor node receives a downlink data packet from the mobile gateway device, the donor node sends the downlink data packet to the terminal via one or more IAB nodes. There are two available paths for data packet transmission between a terminal 1 and the donor node: the terminal 1->the IAB node 4→the IAB node 3→the IAB node 1→the donor node, and the terminal 1→the IAB node 4→the IAB node 2→the IAB node 1→the donor node. There are three available paths for data packet transmission between a terminal 2 and the donor node: the terminal 2→the IAB node 4→the IAB node 3→the IAB node 1→the donor node, the terminal 2→the IAB node 4→the IAB node 2→the IAB node 1→the donor node, and the terminal 2→the IAB node 5→the IAB node 2→the IAB node 1→the donor node.

For example, the donor node in this embodiment of this application may be a donor base station. The donor node may be briefly referred to as an IAB donor (IAB donor) or a DgNB (that is, a donor gNodeB) in the 5G network. The donor node may be a complete entity, or may be in a form in which a centralized unit (centralized unit, CU for short) and a distributed unit (distributed unit, DU for short) are separated, in other words, the donor node includes a centralized unit (Donor-CU) and a distributed unit (Donor-DU). In the embodiments of this application and the accompanying drawings, an example in which the donor node includes a Donor-CU and a Donor-DU is used to describe the method provided in the embodiments of this application. However, it may be understood that the donor node in this embodiment of this application may not be in a form in which the DU and the CU are separated. In this case, protocol stacks included in donor nodes in FIG. 3 to FIG. 6 of this application do not need to include a protocol stack for communication between the DU of the donor node and the CU of the donor node, and only need to include a protocol stack for communication between the donor node and another node.

For example, the IAB node in this embodiment of this application may serve as a mobile terminal (mobile terminal, MT for short) and a DU. When the IAB node communicates with a parent node of the IAB node, the IAB node may be considered as a terminal. In this case, the IAB node serves as an MT. When the IAB node communicates with a subnode of the IAB node (where the subnode may be a terminal or a terminal part of another IAB node), the IAB node may be considered as a network device. In this case, the IAB node serves as a DU. Therefore, it may be considered that the IAB node includes an MT and a DU. An IAB node may establish a backhaul connection to at least one parent node of the IAB node by using the MT. A DU of an IAB node may provide an access service for a terminal or an MT of another IAB node. For example, referring to FIG. 1A, a terminal is connected to a donor node via an IAB node 2 and an IAB node 1. The IAB node 1 and the IAB node 2 each include a DU and an MT. The DU of the IAB node 2 provides an access service for the terminal. The DU of the IAB node 1 provides an access service for the MT of the IAB node 2. A donor-DU provides an access service for the MT of the IAB node 1.

For example, the IAB node may be a device such as customer premises equipment (customer premises equipment, CPE for short) or a residential gateway (residential gateway, RG for short). The method provided in the embodiments of this application may further be applied to a home access (home access) scenario.

The foregoing IAB networking scenario is merely an example. In an IAB scenario with multi-hop and multi-connection combined, there are more other possible IAB networking scenarios. For example, an IAB node connected to a donor node and an IAB node connected to another donor node form a dual connection to serve a terminal. The possible IAB networking scenarios are not listed one by one herein.

In an IAB network, to transfer a data packet to a correct destination node, routing information may be carried in the data packet. The routing information may be an identifier of the destination node of the data packet, or may be a path label used to indicate a determined routing path.

If the routing information is an identifier of the destination node of the data packet, a route mapping table (or referred to as a forwarding table) used to forward the data packet based on the destination node is configured on each forwarding node (for example, a DU of an IAB node or a donor node). After receiving the data packet, the forwarding node searches the route mapping table based on the identifier of the destination node in the data packet, and determines a unique next-hop node. The route mapping table may be centrally configured, for example, configured by a donor node, a CU of a donor node, or a parent node of the forwarding node for the forwarding node; or may be distributedly generated, for example, generated by the forwarding node based on information exchanged between the forwarding node and a parent node and/or a subnode, where the exchanged information is topology information of a connection between the nodes.

If the routing information is a path label used to indicate a determined routing path, a route mapping table used to forward a data packet based on the path label may be configured on the forwarding node, and the forwarding node may directly determine a next-hop node based on the path label and the route mapping table. If the path label includes identifiers of nodes on the routing path, the forwarding node may alternatively directly determine a next-hop node based on only the path label. It may be understood that, in this manner, a determined transmission path is specified for the data packet at an ingress node (namely, a node to which the path label is added) of the data packet.

Both of the foregoing two cases limit flexibility of node routing, that is, a data packet can be sent only through one determined transmission path for some nodes on which a multi-connection is established. For example, referring to FIG. 1, a node that configures the route mapping table is the donor node. If the donor node cannot know an actual status of each link (for example, whether the link is congested, whether the link is interrupted or recovered, or whether the link is blocked (blockage)) in the network in time, a transmission path configured by the donor node for a data packet of the terminal 1 may be: the donor node→the IAB node 1→the IAB node 3→the IAB node 4→the terminal 1. If a link between the IAB node 3 and the IAB node 4 on the transmission path is congested or interrupted, the data packet of the terminal 1 may fail to be transmitted from the IAB node 3 to the IAB node 4, and a large quantity of data packets of the terminal 1 are accumulated on the IAB node 3. In severe cases, a packet loss may occur. Actually, the IAB node 1 may send the data packet of the terminal 1 via the IAB node 2 and the IAB node 4, thereby avoiding the foregoing problem.

To improve routing flexibility of a node, an embodiment of this application provides a network node, which may be specifically a first node, a fifth node, a first wireless device, a network device, or a sixth node in the following descriptions. For a schematic diagram of a hardware structure of the network node, refer to FIG. 2. FIG. 2 is a schematic diagram of a hardware structure of a network node 20. The network node 20 includes at least one processor 201, a communications bus 202, a memory 203, and at least one communications interface 204.

The processor 201 may be a general-purpose central processing unit (central processing unit, CPU for short), a microprocessor, an application-specific integrated circuit (application-specific integrated circuit, ASIC for short), or one or more integrated circuits configured to control program execution in the solutions in this application.

The communications bus 202 may include a channel for transmitting information between the foregoing components.

The communications interface 204 may be any apparatus such as a transceiver, and is configured to communicate with another device or a communications network, such as the Ethernet, a radio access network (radio access network, RAN for short), or a WLAN.

The memory 203 may be a read-only memory (read-only memory, ROM for short) or another type of static storage device capable of storing static information and instructions, a random access memory (random access memory, RAM for short) or another type of dynamic storage device capable of storing information and instructions, or may be an electrically erasable programmable read-only memory (electrically erasable programmable read-only memory, EEPROM for short), a compact disc read-only memory (compact disc read-only memory, CD-ROM for short) or another compact disc storage, an optical disc storage (including a compressed optical disc, a laser disc, an optical disc, a digital versatile disc, a blue-ray optical disc, and the like), a magnetic disk storage medium or another magnetic storage device, or any other medium that is capable of carrying or storing expected program code in a form of instructions or data structures and that can be accessed by a computer, but this application is not limited thereto. The memory may exist independently, and is connected to the processor through the bus. Alternatively, the memory may be integrated with the processor.

The memory 203 is configured to store application program code for executing the solutions in this application, and the processor 201 controls the execution. The processor 201 is configured to execute the application program code stored in the memory 203, to implement the method provided in the following embodiments of this application.

During specific implementation, in an embodiment, the processor 201 may include one or more CPUs, for example, a CPU 0 and a CPU 1 in FIG. 2.

During specific implementation, in an embodiment, the network node 20 may include a plurality of processors, for example, the processor 201 and a processor 208 in FIG. 2. Each of the processors may be a single-core (single-CPU) processor or a multi-core (multi-CPU) processor. The processors herein may be one or more devices, circuits, and/or processing cores for processing data (for example, a computer program instruction).

During specific implementation, in an embodiment, the network node 20 may further include an output device 205 and an input device 206.

Network elements in this application include a terminal, a donor node, and a wireless backhaul node (for example, an IAB node). It should be noted that the terminal in the embodiments of this application may also be referred to as user equipment (user equipment, UE for short), an access terminal, a subscriber unit, a subscriber station, a mobile station, a remote station, a remote terminal, a mobile device, a user terminal, a wireless communications device, a user agent, or a user apparatus. Alternatively, the terminal may be a station (station, ST for short) in a wireless local area network (wireless local area networks, WLAN for short), or may be a cellular phone, a cordless phone, a session initiation protocol (session initiation protocol, SIP for short) phone, a wireless local loop (wireless local loop, WLL for short) station, a personal digital assistant (personal digital assistant, PDA for short) device, a handheld device having a wireless communication function, a computing device or another processing device connected to a wireless modem, a vehicle-mounted device, or a wearable device (which may also be referred to as a wearable intelligent device). Alternatively, the terminal may be a terminal in a next generation communications system, for example, a terminal in 5G, a terminal in a future evolved public land mobile network (public land mobile network, PLMN for short), or a terminal in an NR communications system.

To better understand the method described below, some protocol layers mentioned below and the accompanying drawings related to the protocol layers are all described herein.

Protocol layers on a device include one or more of the following: a radio resource control (radio resource control, RRC for short) layer, a packet data convergence protocol (packet data convergence protocol, PDCP for short) layer, a radio link control (radio link control, RLC for short) layer, a media access control (media access control, MAC for short) layer, a physical layer (physical layer, PHY for short), a T1 application protocol (T1 application protocol, T1AP for short) layer, an adapt (adaptation) layer, an F 1 application protocol (F 1 application protocol, F1AP for short) layer, a stream control transmission protocol (stream control transmission protocol, SCTP for short) layer, an internet protocol (internet protocol, IP for short) layer, an L2 (layer 2) layer, and an L1 (layer 1) layer. The L2 layer is a link layer. For example, the L2 layer may be a data link layer in an open systems interconnection (open systems interconnection, OSI for short) reference model. The L1 layer may be a physical layer. For example, the L1 layer may be a physical layer in the OSI reference model.

The adapt layer represents an adaptation layer (adaptation layer). The adapt layer has at least one of the following capabilities: adding, to a data packet, routing information identifiable to a wireless backhaul node, performing route selection based on the routing information identifiable to the wireless backhaul node, adding, to a data packet, identification information that is related to a quality of service (quality of service, QoS for short) requirement and that is identifiable to the wireless backhaul node, performing QoS mapping for a data packet on a plurality of links including the wireless backhaul node, adding data packet type indication information to a data packet, and sending flow control feedback information to a node having a flow control capability. It should be noted that a name of a protocol layer having these capabilities is not necessarily an adapt layer. A person skilled in the art may understand that any protocol layer having these capabilities may be understood as the adapt layer in the embodiments of this application. For example, the adapt layer may also be referred to as a backhaul adaptation protocol (backhaul adaptation protocol, BAP for short) layer.

The routing information identifiable to the wireless backhaul node may be one or more of an identifier of a terminal, an identifier of an IAB node accessed by a terminal, an identifier of a donor node, an identifier of a DU of a donor node, an identifier of a CU of a donor node, an identifier of a transmission path, and the like.

The QoS mapping on the plurality of links may be: mapping performed on a backhaul link from a radio bearer of a terminal to a radio bearer, an RLC bearer (RLC bearer), an RLC channel (RLC channel), or a logical channel on a wireless backhaul interface based on an identifier that is of the radio bearer of the terminal and that is carried in a data packet; or mapping performed from a radio bearer, an RLC bearer, an RLC channel, or a logical channel for receiving a data packet on a previous-hop link to a radio bearer, an RLC bearer, an RLC channel, or a logical channel for sending a data packet on a next-hop link; or mapping performed from a specific QoS identifier to a radio bearer, an RLC bearer, an RLC channel, or a logical channel on a wireless backhaul interface based on a specific QoS identifier (for example, a quality of service class identifier (QoS class identifier, QCI for short), a 5G quality of service identifier (5G QoS identifier, 5QI for short), a quality of service flow identifier (QoS flow identity, QFI for short), a differentiated services code point (differentiated services code point, DSCP for short), or a flow label (flow label) in an internet protocol version 6 (internet protocol version 6, IPv6 for short) packet header) carried in a data packet.

The data packet type indication information may be used to indicate that content encapsulated at a BAP layer includes any one of the following types: user plane data of the terminal, an RRC message of the terminal, an RRC message of the IAB node, a control layer application message (for example, a T1AP message) on an interface between the IAB node and the donor node or a CU of the donor node, a flow control feedback message generated by the IAB node, and the like. By using a T1AP layer on a node, the node may send a first message to a peer T1AP layer on another node. The first message includes context management information of a terminal served by the node or the another node, an RRC message of the terminal, or a message related to management of an interface between the two nodes. A message generated or sent by a node at the T1AP protocol layer may be referred to as a T1AP message.

The identification information related to the QoS requirement may be a QFI of the terminal, an identifier of a radio bearer (for example, a data radio bearer (data radio bearer, DRB for short) or a signaling radio bearer (signaling radio bearer, SRB for short)) of the terminal, a tunnel endpoint identifier (Tunnel endpoint identifier, TEID for short) corresponding to the data radio bearer of the terminal, a DSCP, or the like.

For example, a node with a flow control capability may be an upstream node that provides a backhaul service for the IAB node, for example, a donor node, a DU of a donor node, a CU of a donor node, or a parent node of the IAB node. Content of the flow control feedback information may include one or more of the following information: a buffer status and load of the IAB node, a status (for example, link blockage, link interruption, link resume (resume), or link quality information) of a link including the IAB node, a bandwidth and transmission delay of a link including the IAB node, a sequence number of a data packet lost at the IAB node, a sequence number of a data packet successfully sent by the IAB node to a terminal or a subnode of the IAB node.

The BAP layer may be located above an RLC layer and below a PDCP layer, or may be located at another position in the protocol stack. A specific position of the BAP layer is not limited in the embodiments of this application.

The T1AP layer is used to carry a control plane message between the IAB node (which may be specifically the DU of the IAB node) and the donor node (or the CU of the donor node). The control plane message includes one or more of the following messages: a message related to management of an interface between the IAB node and the donor node (or the CU of the donor node), a message related to configuration update between the IAB node and the donor node (or the CU of the donor node), a context configuration message related to the subnode (including a terminal, another IAB node, and the like) of the IAB node, and a message including a message container (message container) that carries an RRC message of the subnode of the IAB node. The T1AP layer may be located above the PDCP layer, or may be located at another position in the protocol stack. A specific position of the T1AP layer is not limited in the embodiments of this application.

It should be noted that a name of a protocol layer having these capabilities is not necessarily a T1AP layer, and specifically depends on the interface between the IAB node and the donor node (or the CU of the donor node). For example, if the interface between the IAB node and the donor node (or the CU of the donor node) is an F1 interface or an F1^{∗} interface, the protocol layer may also be referred to as an F1AP layer or an F1 *AP layer. The F1 interface or the F1^{∗} interface may also have another name. This is not specifically limited in the embodiments of this application. A person skilled in the art may understand that any protocol layer having these capabilities may be understood as the T1AP layer in the embodiments of this application.

The F1AP layer is configured to carry a control plane message between the DU and CU. The control plane message includes one or more of the following messages: a message related to management of an interface between the DU and the CU, a message related to configuration update between the DU and the CU, a context configuration message related to a subnode (including a terminal, another IAB node, and the like) of the DU, a message including a message container (message container) that carries an RRC message of the subnode of the DU, and the like. The DU herein may be the DU of the IAB node and/or the DU of the donor node. The F1AP layer may be located above an SCTP layer, or may be located at another position in the protocol stack. A specific position of the F1AP layer is not limited in the embodiments of this application. It should be noted that a name of a protocol layer having these capabilities is not necessarily an F1AP layer. A person skilled in the art may understand that any protocol layer having these capabilities may be understood as the FLAP layer in the embodiments of this application.

Several protocol architectures are provided below as examples for understanding. In the protocol stack architectures shown in FIG. 3 to FIG. 6, a DU is a DU of a donor node, and a CU is a CU of the donor node. Protocol stacks of each node in the protocol stack architectures shown in FIG. 3 to FIG. 6 are merely examples. During actual implementation, protocol layers included in the protocol stacks of each node may be more or less than or different from those shown in the figures. This is not specifically limited in the embodiments of this application.

Referring to FIG. 3, a control plane protocol architecture includes a CU, a DU, an IAB node 1, an IAB node 2, and a terminal. A protocol stack of the terminal sequentially includes, from top to bottom, an RRC layer and a PDCP layer that are peered to those of the CU, and an RLC layer, a MAC layer, and a PHY layer that are peered to those of the IAB node 2. A protocol stack through which the IAB node 2 communicates with the terminal sequentially includes, from top to bottom, an RLC layer, a MAC layer, and a PHY layer that are peered to those of the terminal. A protocol stack through which the IAB node 2 communicates with the CU sequentially includes, from top to bottom, a T1AP layer and a PDCP layer that are peered to those of the CU. A protocol stack through which the IAB node 2 communicates with the IAB node 1 sequentially includes, from top to bottom, a BAP layer, an RLC layer, a MAC layer, and a PHY layer that are peered to those of the IAB node 1. A protocol stack through which the IAB node 1 communicates with the IAB node 2 sequentially includes, from top to bottom, a BAP layer, an RLC layer, a MAC layer, and a PHY layer that are peered to those of the IAB node 2. A protocol stack through which the IAB node 1 communicates with the DU sequentially includes, from top to bottom, a BAP layer, an RLC layer, a MAC layer, and a PHY layer that are peered to those of the DU. A protocol stack through which the DU communicates with the IAB node 1 sequentially includes, from top to bottom, a BAP layer, an RLC layer, a MAC layer, and a PHY layer that are peered to those of the IAB node 1. A protocol stack through which the DU communicates with the CU sequentially includes, from top to bottom, an F1AP layer, an SCTP layer, an IP layer, an L2 layer, and an L1 layer that are peered to those of the CU. A protocol stack of the CU sequentially includes, from top to bottom, an RRC layer and a PDCP layer that are peered to those of the terminal, a T1AP layer and a PDCP layer that are peered to those of the IAB node 2, and an F1AP layer, an SCTP layer, an IP layer, an L2 layer, and an L1 layer that are peered to those of the DU.

It should be noted that, if a DRB or an RLC bearer/an RLC bearer/a logical channel corresponding to a DRB is used on a wireless backhaul interface (a Un interface in the figure) to transmit a T1AP message of an IAB node, the F1AP layers in the protocol layers in the dashed box in FIG. 3 may further be replaced with general packet radio service tunneling protocol (general packet radio service tunneling protocol, GTP for short) layers, and the SCTP layers may be replaced with user datagram protocol (user datagram protocol, UDP for short) layers.

In FIG. 3, in the protocol stack through which the IAB node 2 communicates with the CU, the T1AP layer may be replaced with an F1AP layer, the PDCP layer may be replaced with an SCTP layer, and an IP layer peered to that of the DU may further be included between the SCTP layer and the BAP layer. The protocol stack through which the DU communicates with the IAB node 2 includes an IP layer peered to that of the IAB node 2. The protocol stack through which the DU communicates with the CU may alternatively not include the F1AP layer and the SCTP layer. Correspondingly, in the protocol stack of the CU, the T1AP layer peered to that of the IAB node 2 may be replaced with an F1AP layer, the PDCP layer may be replaced with an SCTP layer, and the F1AP layer and the SCTP layer that are peered to those of the DU may alternatively not be included. In this case, for a protocol stack architecture of each node, refer to FIG. 3A.

In FIG. 3A, F1^{∗}-C refers to a control plane of an F1^{∗} interface between an IAB node and a donor node. In addition to an F1AP layer, an SCTP layer, and an IP layer that are shown in FIG. 3, an Fl*-C interface protocol layer may further include a protocol layer configured to perform security protection on an F1^{∗}-C interface message, for example, one or more of a datagram transport layer security (datagram transport layer security, DTLS for short) layer, a PDCP layer, and an internet protocol security (internet protocol security, IPsec for short) layer. The DTLS layer may be located between the SCTP layer and the F1AP layer. The PDCP layer may be a protocol layer that is of an IAB node 2 and that is peered to that of a CU of the donor node, and may be located below the F1AP layer. The IPsec layer may be a protocol layer that is of the IAB node 2 and that is peered to that of the CU of the donor node, may be a protocol layer that is of the IAB node 2 and that is peered to that of a DU of the donor node, or may be a protocol layer that is of a DU of the donor node and that is peered to that of the CU of the donor node, and may be located between the IP layer and the SCTP layer.

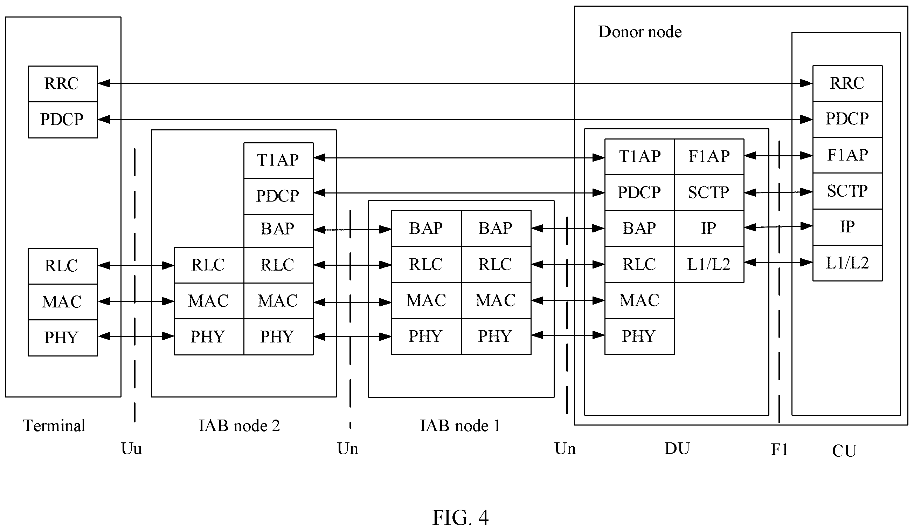

Referring to FIG. 4, a control plane protocol architecture includes a CU, a DU, an IAB node 1, an IAB node 2, and a terminal. A protocol stack of the terminal sequentially includes, from top to bottom, an RRC layer and a PDCP layer that are peered to those of the CU, and an RLC layer, a MAC layer, and a PHY layer that are peered to those of the IAB node 2. A protocol stack through which the IAB node 2 communicates with the terminal sequentially includes, from top to bottom, an RLC layer, a MAC layer, and a PHY layer that are peered to those of the terminal. A protocol stack through which the IAB node 2 communicates with the CU sequentially includes, from top to bottom, a T1AP layer and a PDCP layer that are peered to those of the CU. A protocol stack through which the IAB node 2 communicates with the IAB node 1 sequentially includes, from top to bottom, a BAP layer, an RLC layer, a MAC layer, and a PHY layer that are peered to those of the IAB node 1. A protocol stack through which the IAB node 1 communicates with the IAB node 2 sequentially includes, from top to bottom, a BAP layer, an RLC layer, a MAC layer, and a PHY layer that are peered to those of the IAB node 2. A protocol stack through which the IAB node 1 communicates with the DU sequentially includes, from top to bottom, a BAP layer, an RLC layer, a MAC layer, and a PHY layer that are peered to those of the DU. A protocol stack through which the DU communicates with the IAB node 2 sequentially includes, from top to bottom, a T1AP layer and a PDCP layer that are peered to those of the IAB node 2. A protocol stack through which the DU communicates with the IAB node 1 sequentially includes, from top to bottom, a BAP layer, an RLC layer, a MAC layer, and a PHY layer that are peered to those of the IAB node 1. A protocol stack through which the DU communicates with the CU sequentially includes, from top to bottom, an F1AP layer, an SCTP layer, an IP layer, an L2 layer, and an L1 layer that are peered to those of the CU. A protocol stack of the CU sequentially includes, from top to bottom, an RRC layer and a PDCP layer that are peered to those of the terminal, and an F1AP layer, an SCTP layer, an IP layer, an L2 layer, and an L1 layer that are peered to those of the DU.

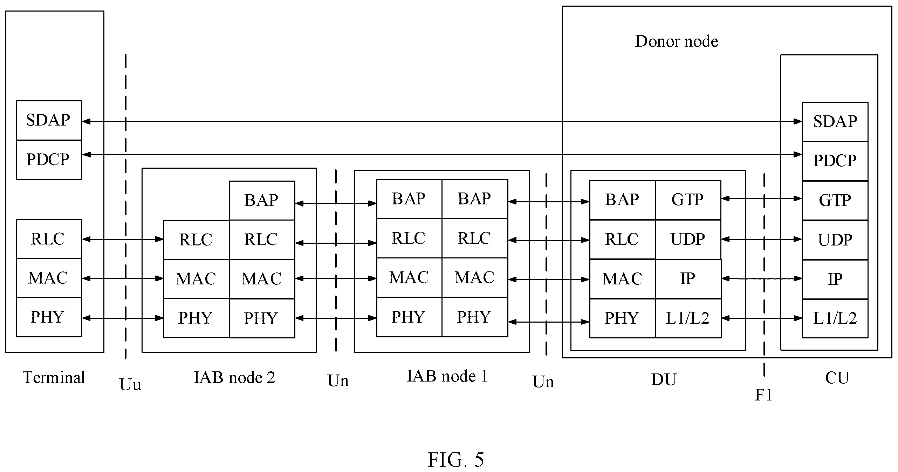

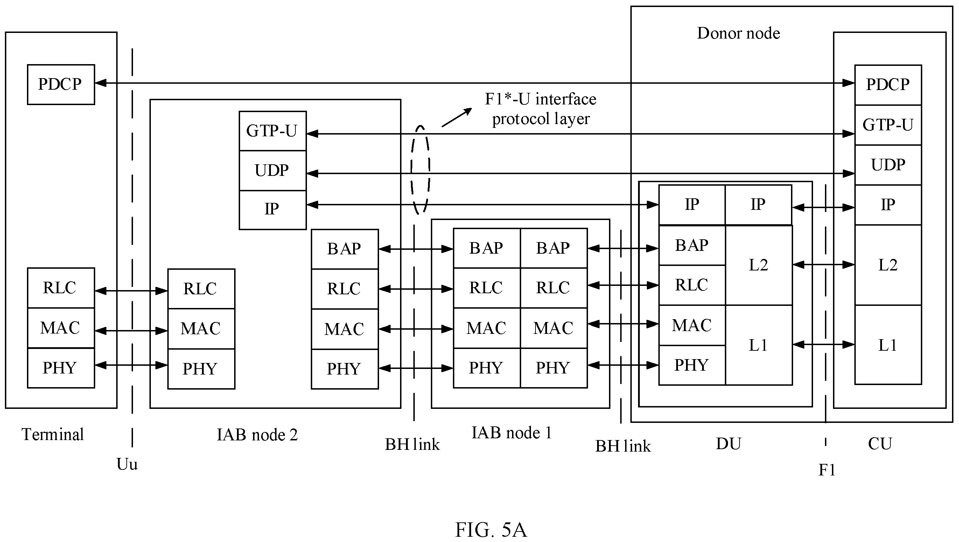

Referring to FIG. 5, a user plane protocol architecture includes a CU, a DU, an IAB node 1, an IAB node 2, and a terminal. A protocol stack of the terminal sequentially includes, from top to bottom, an SDAP layer and a PDCP layer that are peered to those of the CU, and an RLC layer, a MAC layer, and a PHY layer that are peered to those of the IAB node 2. A protocol stack through which the IAB node 2 communicates with the terminal sequentially includes, from top to bottom, an RLC layer, a MAC layer, and a PHY layer that are peered to those of the terminal. A protocol stack through which the IAB node 2 communicates with the IAB node 1 sequentially includes, from top to bottom, a BAP layer, an RLC layer, a MAC layer, and a PHY layer that are peered to those of the IAB node 1. A protocol stack through which the IAB node 1 communicates with the IAB node 2 sequentially includes, from top to bottom, a BAP layer, an RLC layer, a MAC layer, and a PHY layer that are peered to those of the IAB node 2. A protocol stack through which the IAB node 1 communicates with the DU sequentially includes, from top to bottom, a BAP layer, an RLC layer, a MAC layer, and a PHY layer that are peered to those of the DU. A protocol stack through which the DU communicates with the IAB node 1 sequentially includes, from top to bottom, a BAP layer, an RLC layer, a MAC layer, and a PHY layer that are peered to those of the IAB node 1. A protocol stack through which the DU communicates with the CU sequentially includes, from top to bottom, a GTP layer, a UDP layer, an IP layer, an L2 layer, and an L1 layer that are peered to those of the CU. A protocol stack of the CU sequentially includes, from top to bottom, an SDAP layer and a PDCP layer that are peered to those of the terminal, and a GTP layer, a UDP layer, an IP layer, an L2 layer, and an L1 layer that are peered to those of the DU.

Referring to FIG. 5A, a user plane protocol architecture includes a CU, a DU, an IAB node 1, an IAB node 2, and a terminal. A protocol stack of the terminal sequentially includes, from top to bottom, a PDCP layer peered to that of the CU, and an RLC layer, a MAC layer, and a PHY layer that are peered to those of the IAB node 2. A protocol stack through which the IAB node 2 communicates with the terminal sequentially includes, from top to bottom, an RLC layer, a MAC layer, and a PHY layer that are peered to those of the terminal. A protocol stack through which the IAB node 2 communicates with the CU sequentially includes, from top to bottom, a GTP user plane (GTP user plane, GTP-U for short) layer and a UDP layer that are peered to those of the CU. A protocol stack through which the IAB node 2 communicates with the DU includes an IP layer peered to that of the DU. A protocol stack through which the IAB node 2 communicates with the IAB node 1 sequentially includes, from top to bottom, a BAP layer, an RLC layer, a MAC layer, and a PHY layer that are peered to those of the IAB node 1. A protocol stack through which the IAB node 1 communicates with the IAB node 2 on a wireless backhaul link sequentially includes, from top to bottom, a BAP layer, an RLC layer, a MAC layer, and a PHY layer that are peered to those of the IAB node 2. A protocol stack through which the IAB node 1 communicates with the DU on a wireless backhaul link sequentially includes, from top to bottom, a BAP layer, an RLC layer, a MAC layer, and a PHY layer that are peered to those of the DU. A protocol stack through which the DU communicates with the IAB node 2 on a wireless backhaul link includes an IP layer peered to that of the IAB node 2. A protocol stack through which the DU communicates with the IAB node 1 on a wireless backhaul link sequentially includes, from top to bottom, a BAP layer, an RLC layer, a MAC layer, and a PHY layer that are peered to those of the IAB node 1. A protocol stack through which the DU communicates with the CU on a wireless backhaul link sequentially includes, from top to bottom, an IP layer, an L2 layer, and an L1 layer that are peered to those of the CU. A protocol stack of the CU sequentially includes, from top to bottom, a PDCP layer peered to that of the terminal, a GTP-U layer and a UDP layer that are peered to those of the IAB node 2, and an IP layer, an L2 layer, and an L1 layer that are peered to those of the DU.

In FIG. 5A, F1^{∗}-U refers to a user plane of an F1^{∗} interface between an IAB node and a donor node. In addition to the GTP-U layer, the UDP layer, and the IP layer that are shown in FIG. 5A, an F1^{∗}-U interface protocol layer may further include a protocol layer configured to perform security protection on an F1^{∗}-U interface message, for example, one or more of a PDCP layer and an IPsec layer. The PDCP layer may be a protocol layer that is of the IAB node 2 and that is peered to that of the CU of the donor node, and may be located below the GTP-U layer. The IPsec layer may be a protocol layer that is of the IAB node 2 and that is peered to that of the CU of the donor node, may be a protocol layer that is of the IAB node 2 and that is peered to that of the DU of the donor node, or may be a protocol layer that is of the DU of the donor node and that is peered to that of the CU of the donor node, and may be located between the IP layer and the UDP layer.

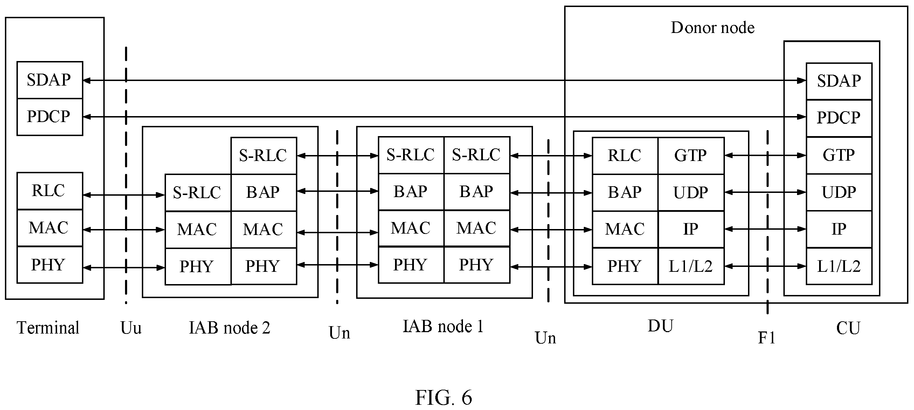

Referring to FIG. 6, a user plane protocol architecture includes a CU, a DU, an IAB node 1, an IAB node 2, and a terminal. A protocol stack of the terminal sequentially includes, from top to bottom, an SDAP layer and a PDCP layer that are peered to those of the CU, and an RLC layer, a MAC layer, and a PHY layer that are peered to those of the IAB node 2. A protocol stack through which the IAB node 2 communicates with the terminal sequentially includes, from top to bottom, an S-RLC layer, a MAC layer, and a PHY layer that are peered to those of the terminal. A protocol stack through which the IAB node 2 communicates with the IAB node 1 sequentially includes, from top to bottom, an S-RLC layer, a BAP layer, a MAC layer, and a PHY layer that are peered to those of the IAB node 1. A protocol stack through which the IAB node 1 communicates with the IAB node 2 sequentially includes, from top to bottom, an S-RLC layer, a BAP layer, a MAC layer, and a PHY layer that are peered to those of the IAB node 2. A protocol stack through which the IAB node 1 communicates with the DU sequentially includes, from top to bottom, an S-RLC layer, a BAP layer, a MAC layer, and a PHY layer that are peered to those of the DU. A protocol stack through which the DU communicates with the IAB node 1 sequentially includes, from top to bottom, an RLC layer, a BAP layer, a MAC layer, and a PHY layer that are peered to those of the IAB node 1. A protocol stack through which the DU communicates with the CU sequentially includes, from top to bottom, a GTP layer, a UDP layer, an IP layer, an L2 layer, and an L1 layer that are peered to those of the CU. A protocol stack of the CU sequentially includes, from top to bottom, an SDAP layer and a PDCP layer that are peered to those of the terminal, and a GTP layer, a UDP layer, an IP layer, an L2 layer, and an L1 layer that are peered to those of the DU.

The S-RLC layer is a simplified RLC layer (simplified RLC) that reserves some RLC layer functions. The simplified protocol layer does not have automatic repeat request (automatic repeat request, ARQ for short) and reassemble (reassemble) functions. On a receiving side, the S-RLC layer neither reassembles (reassemble) a received data packet (RLC PDU) nor performs ACK/NACK feedback in an AM mode. The S-RLC layer does not retransmit the data packet on a sending side, but may perform a segmentation (segmentation) operation on an RLC SDU in the data packet or may perform a re-segmentation (re-segmentation) operation on a segment (segment) of an RLC SDU in the data packet. After performing the segmentation or re-segmentation operation, the S-RLC layer constructs a new RLC header to generate a new RLC PDU, and then delivers the new RLC PDU to a lower protocol layer on the sending side for processing.

To make the following descriptions clearer, descriptions of "hop-by-hop", "end-to-end", and "segment-by-segment" in the embodiments of this application are all clarified herein.

If a path between a node D and a node E includes S nodes, nodes on the path are successively: the node D, a node 1, a node 2, ..., a node S, and the node E.

If the node D and the node E are described as each having a hop-by-hop peer protocol layer (which may be, for example, a first protocol layer), it indicates that the node D and the node 1 each have the peer protocol layer, a node s and a node s+1 each have the peer protocol layer, and the node S and the node E each have the peer protocol layer, where s is an integer greater than 0 and less than S.

If the node D and the node E are described as each having an end-to-end peer protocol layer (which may be, for example, a first protocol layer), it indicates that the node D and the node E each have the peer protocol layer, the node D and the node 1 do not have the peer protocol layer, and the node S and the node E do not have the peer protocol layer either.

If the node D and the node E are described as each having a segment-by-segment peer protocol layer (which may be, for example, a first protocol layer), it indicates that the segment-by-segment peer protocol layers of the node D and the node E are established by using a plurality of end-to-end peer protocol layers between the node D and the node E, and a data packet may be forwarded between two endpoints of at least one of the plurality of end-to-end peer protocol layers via another node. For example, the segment-by-segment peer protocol layers of the node D and the node E may be established by using two end-to-end peer protocol layers between the node D and the node E. For example, the node D and a node S1 (a node in the node 1 to the node S) each have an end-to-end peer protocol layer, the node S1 and the node E each have an end-to-end peer protocol layer, and a data packet may be forwarded between the node D and the node S1 and/or between the node S1 and the node E via another node.

For example, referring to FIG. 3 and FIG. 4, the IAB node 2 and the DU each have a hop-by-hop peer BAP layer, and the DU and the CU each have a peer F1AP layer. In FIG. 4, the IAB node 2 and the DU each have an end-to-end peer T1AP layer. Alternatively, if a function of the T1AP layer on the IAB node 2 is the same as a function of F1AP layers of the CU and the DU, it may be considered that there is a segment-by-segment peer T1AP layer between the IAB node 2 and the CU over the DU. In FIG. 3, the IAB node 2 and the CU each have an end-to-end peer T1AP layer.

In this embodiment of this application, unless otherwise specified, that the node D and the node E each have a peer protocol layer may refer to any one of the foregoing three cases. Certainly, protocol layers of neighboring nodes may also be peered. For example, the F1AP layers of the DU and the CU in FIG. 3 and FIG. 4 are peered.

To make the following descriptions clearer, some content mentioned in the embodiments of this application is briefly described herein.

A source node is the initial node for transmitting a data packet on a RAN side. For example, for an uplink data packet, the source node may be a terminal or a wireless backhaul node providing a wireless access service for a terminal. For a downlink data packet, the source node may be a donor node, a CU of a donor node, or a DU of a donor node.

A destination node is the last node for transmitting a data packet on the RAN side. For example, for an uplink data packet, the destination node may be a donor node, a CU of a donor node, or a DU of a donor node. For a downlink data packet, the destination node may be a terminal or a wireless backhaul node providing a wireless access service for a terminal.

A QoS label is a QoS type, and is used to identify a QoS requirement. For example, the QoS label may be a 5QI, a QCI, a DSCP, a QFI, or the like.

A link is a path between two neighboring nodes on a path.

A downstream node of a node C is a node that receives a data packet after the node C and that is on a path including the node C. The node C in the embodiments of this application is any node rather than a specific node. The node D and the node E in the following descriptions are similar to the case of the node C. For example, the node C may be a first node in the following descriptions.

An upstream node of the node C is a node that receives a data packet before the node C and that is on a path including the node C.

A next-hop node of the node C is the 1^{st} node that receives a data packet after the node C and that is on a path including the node C.

For example, referring to FIG. 1, if the data packet is an uplink data packet, on a path: the terminal 1→the IAB node 4→the IAB node 3→the IAB node 1→the donor node, downstream nodes of the IAB node 3 are the IAB node 1 and the donor node, upstream nodes of the IAB node 3 are the terminal 1 and the IAB node 4, and a next-hop node of the IAB node 3 is the IAB node 1. The path includes four links: the terminal 1→the IAB node 4, the IAB node 4→the IAB node 3, the IAB node 3→the IAB node 1, and the IAB node 1→the donor node.

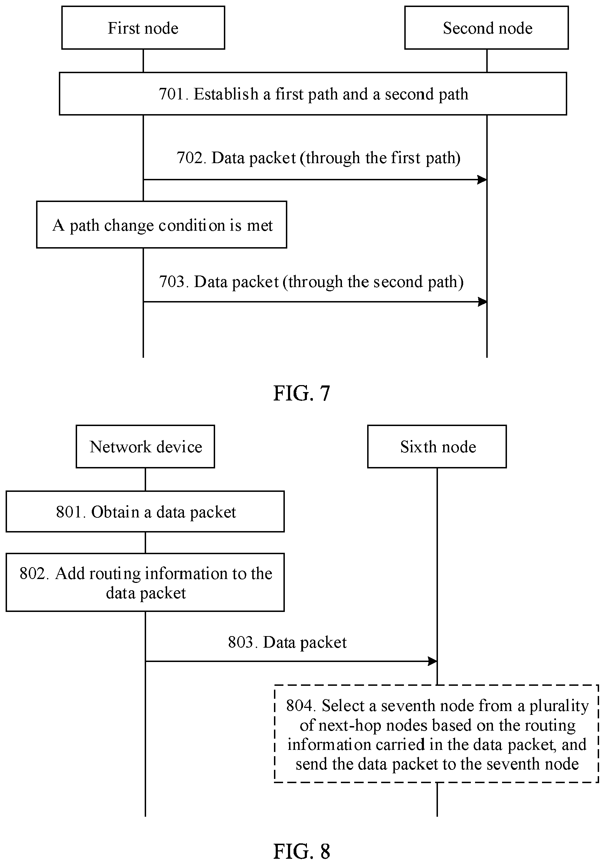

An embodiment of this application provides a path change method. The method is applied to a radio access network. The radio access network includes a terminal, a wireless backhaul node, and a donor node. The wireless backhaul node is configured to provide a wireless backhaul service for a node wirelessly accessing the wireless backhaul node. The terminal communicates with the donor node via the wireless backhaul node. As shown in FIG. 7, the method includes the following steps.

701. A first node establishes a first path and a second path between the first node and a second node.

Both the first node and the second node are nodes in the radio access network.

The first node may be a complete donor node, a DU of a donor node, a CU of a donor node, or a wireless backhaul node (for example, an IAB node or an RN). In this case, the second node may be a wireless backhaul node or a terminal.

The first node may also be a wireless backhaul node or a terminal. In this case, the second node may be a complete donor node, a DU of a donor node, a CU of a donor node, or a wireless backhaul node.

It should be noted that the first node may establish a plurality of paths between the first node and the second node, and the plurality of paths include the first path and the second path. The first path and the second path may be any two paths in the plurality of paths. At least one node on the first path is different from nodes on the second path. At least one path in the first path and the second path includes at least two links.

The plurality of paths may include one main path and one or more standby paths. When the first path is a main path, the second path may be a standby path. When the first path is a standby path, the second path may be a main path or a standby path.

702. The first node sends a data packet to the second node through the first path.

Payload (payload) included in the data packet in the embodiments of this application may be control plane signaling or user plane data. Alternatively, the data packet in the embodiments of this application may be a service data unit (service data unit, SDU for short) or a protocol data unit (protocol data unit, PDU for short). The data packet in the embodiments of this application may be a downlink data packet or an uplink data packet.

When the second node is a wireless backhaul node, the payload in the data packet may be an F1AP message (where in this case, the second node serves as a DU in the network, for example, may be a DU of an IAB node), or may be user plane data or an RRC message. The user plane data or the RRC message may belong to the second node (where in this case, the second node serves as a terminal in the network, for example, may be an MT of an IAB node), or may belong to a terminal served by the second node. If the user plane data or the RRC message belongs to the terminal served by the second node, the second node may subsequently send the user plane data or the RRC message to the corresponding terminal.

When the second node is a terminal, the payload in the data packet may be the user plane data or the RRC message of the second node.

703. When the first node determines that a path change condition is met, the first node changes from the first path to the second path to send the data packet to the second node.

The path change condition may include one or more of the following conditions:
(1) An example for understanding, the data packet is an uplink data packet, the first node has not obtained, within a first preset time period, a scheduling resource allocated by a first next-hop node, where the first next-hop node is a next-hop node of the first node on the first path.

In this embodiment of this application, the scheduling resource allocated to the first node may be a radio resource used by the first node to transmit an uplink data packet.

It should be noted that, in a communications network, when a data packet is an uplink data packet, a scheduling resource (namely, a radio resource used by the first node to transmit the uplink data packet) of a node may be allocated (or scheduled) by a next-hop node (or a parent node) of the node. The next-hop node determines, based on a link status of a link between the next-hop node and the node or a busy degree of the next-hop node, whether to allocate a scheduling resource to the node. Therefore, in this embodiment of this application, when the first node has not obtained, within a long period of time (for example, within the first preset time period), the scheduling resource allocated by the next-hop node of the first node on the first path, it indicates that a status of a link between the first node on the first path and the next-hop node of the first node is poor or a busy degree of the next-hop node of the first node is high. In this case, the first node may send the data packet to the second node through the second path.

When the first node changes a path based on the path change condition and learns that the first path cannot provide resource assurance for transmission of the uplink data packet, the first node may change the path as early as possible, to avoid impact on a service of the terminal.

Optionally, when the first next-hop node determines that a link status of a link between any two downstream nodes after the first next-hop node on the first path is poor or a busy degree of any downstream node is high, the first next-hop node may not allocate a resource to the first node. In this case, it can be avoided that the data packet cannot continue to be transmitted after being transmitted from the first node to the first next-hop node.

It should be noted that a poor link status of a link in this embodiment of this application may be link congestion, link interruption, link blockage, insufficient link resources, or the like. A busy degree of a node may be represented by radio resource utilization or a buffer status of the node. For example, when radio resource utilization of a node or a total data volume of buffered data packets of a node is greater than a specific threshold, it may be determined that a busy degree of the node is high.

For example, referring to FIG. 1, the first path is: the IAB node 4→the IAB node 2→the IAB node 1→the donor node, and the second path is: the IAB node 4→the IAB node 3→the IAB node 1→the donor node. The first node is the IAB node 4, and the second node is the donor node. If the IAB node 4 has not obtained, within the first preset time period, a scheduling resource allocated by the IAB node 2, the IAB node 4 may determine to send the data packet to the donor node through the second path. The IAB node 2 may not allocate the scheduling resource to the IAB node 4 when a status of a link between the IAB node 2 and the IAB node 4 is poor or a busy degree of the IAB node 2 is high, or may not allocate the scheduling resource to the IAB node 4 when a busy degree of the IAB node 1 or the donor node is high.

(2) An example for understanding, a total data volume (data volume) of data packets that are buffered in the first node and that are to be sent to the first next-hop node is greater than or equal to a first preset value.

It should be noted that a poorer link status of the link between the first node and the next-hop node of the first node indicates more data packets that are buffered in the first node and that are to be sent to the next-hop node. Therefore, more data packets that are buffered in the first node and that are to be sent to the first next-hop node indicates a poorer link status of the link between the first node and the first next-hop node. In this case, the first node may send the data packet to the second node through the second path.

In addition, the first node may allocate buffer space to each next-hop node. In this case, the path change condition (2) may be replaced with: An occupation rate of the buffer space allocated by the first node to the next-hop node of the first node on the first path is greater than or equal to a first preset value.

When the first node changes the path based on the path change condition, a case in which a data packet buffered on the first node needs to wait for an excessively long period of time and even is discarded (where for example, the data packet is discarded due to buffer overflow) due to a poor link status can be avoided.

For example, referring to FIG. 1, the first path is: the IAB node 4→the IAB node 2→the IAB node 1→the donor node, and the second path is: the IAB node 4→the IAB node 3→the IAB node 1→the donor node. The first node is the IAB node 4, the second node is the donor node, and the first preset value is 1.5 (GB). If a total data volume of data packets that are buffered in the IAB node 4 and that are to be sent to the IAB node 2 is 2 GB, and a total data volume of data packets that are buffered in the IAB node 4 and that are to be sent to the IAB node 3 is 1 GB, when the IAB node 4 determines that the total data volume of the buffered data packets to be sent to the IAB node 2 is greater than or equal to the first preset value, the IAB node 4 sends the data packets to the second node through the second path.

(3) An example for understanding, at least one link quality evaluation parameter of at least one link on the first path is less than or equal to a corresponding preset value.

There may be one or more link quality evaluation parameters. When at least one link quality evaluation parameter of a link is less than or equal to the corresponding preset value, the first node may determine that a link status of the link is poor. In other words, the first node may send the data packet to the second node through the second path when determining that a link status of one or more links on the first path is poor.

In a possible implementation, the at least one link quality evaluation parameter includes at least one of the following parameters: reference signal received power (reference signal received power, RSRP for short), reference signal received quality (reference signal received quality, RSRQ for short), a receive signal strength indicator (receive signal strength indicator, RSSI for short), a signal to interference plus noise ratio (signal to interference plus noise ratio, SINR for short), and a channel quality indicator (channel quality indicator, CQI for short).

The RSRP, the RSRQ, the RSSI, the SINR, and the CQI each may be an uplink parameter or a downlink parameter. The first node may obtain a link quality evaluation parameter of an uplink and/or a downlink between the first node and another node through measurement, may further receive a link quality evaluation parameter of an uplink and/or a downlink between other nodes, and determine, based on these link quality evaluation parameters, whether a link status is good enough, thereby providing a high-quality transmission service for a user data packet.

An example for undertanding, based on the network architecture shown in FIG. 1, the IAB node 1 may obtain, through measurement, a link quality evaluation parameter of an uplink between the IAB node 2 and the IAB node 1 and a link quality evaluation parameter of an uplink between the IAB node 3 and the IAB node 1. The IAB node 1 may further receive a link quality evaluation parameter of a downlink between the IAB node 2 and the IAB node 1 and a link quality evaluation parameter of a downlink between the IAB node 3 and the IAB node 1, where the link quality evaluation parameters are obtained by the IAB node 2 and the IAB node 3 through measurement. The IAB node 1 may further receive a link quality evaluation parameter of an uplink between the IAB node 2 and the IAB node 4 and a link quality evaluation parameter of an uplink between the IAB node 3 and the IAB node 4, where the link quality evaluation parameters are obtained by the IAB node 2 and the IAB node 3 through measurement. Further, the IAB node 1 may receive a link quality evaluation parameter of a downlink between the IAB node 2 and the IAB node 4 and a link quality evaluation parameter of a downlink between the IAB node 3 and the IAB node 4, where the link quality evaluation parameters are obtained by the IAB node 4 through measurement.

An example for undertanding, the at least one link quality evaluation parameter is RSRP, and the data packet is an uplink data packet. In this case, when the first node determines that RSRP, obtained by the first node through measurement, of the uplink between the IAB node 2 and the IAB node 1 is less than or equal to a preset value corresponding to the RSRP, the first node determines that a link status of the uplink between the IAB node 2 and the IAB node 1 is poor, and cannot provide a high-quality transmission service for a user data packet. If the data packet is a downlink data packet, when the first node determines that received RSRP, sent by the IAB node 2, of the downlink between the IAB node 2 and the IAB node 1 is less than or equal to a preset value corresponding to the RSRP, the first node determines that a status of the downlink between the IAB node 2 and the IAB node 1 is poor. A process of determining a link status of another link is similar, and details are not described herein again.

It should be noted that when the at least one link quality evaluation parameter includes a plurality of parameters of the RSRP, the RSRQ, the RSSI, the SINR, and the CQI, each of the plurality of parameters may correspond to one preset value. The first node may determine that a link status of a link is poor only when each of a plurality of parameters corresponding to the link is less than or equal to a corresponding preset value.

An example for undertanding, the link quality evaluation parameter is a parameter calculated based on at least two parameters in the RSRP, the RSRQ, the RSSI, the SINR, and the CQI.

When the link quality evaluation parameter is a parameter calculated based on at least two parameters in the RSRP, the RSRQ, the RSSI, the SINR, and the CQI, link quality evaluation parameters calculated based on different parameters in the RSRP, the RSRQ, the RSSI, the SINR, and the CQI are different. For example, a parameter calculated based on the RSRP and the RSRQ may be a link quality evaluation parameter, and a parameter calculated based on the RSRQ and the RSSI may be another link quality evaluation parameter. The first node may determine, based on one or more calculated link quality evaluation parameters, whether a link status of a link is poor.

Specifically, the first node may perform an operation (for example, a summation operation or a weighting operation) on at least two parameters in the RSRP, the RSRQ, the RSSI, the SINR, and the CQI, to obtain a link quality evaluation parameter.

For a method in which the first node obtains one or more parameters in RSRP, RSRQ, an RSSI, an SINR, and a CQI of a link, and determines, based on a link quality evaluation parameter of the link, whether a link status of the link is poor, refer to the foregoing descriptions, and details are not described herein again.

When the first node changes a path based on the path change condition, because the link quality evaluation parameter may indirectly represent a service requirement that can be met by a link, when a link quality evaluation parameter of any link on the first path does not meet the requirement, the first node may change the data packet from the first path to another path for transmission, to avoid a case in which the service requirement cannot be met.

It should be noted that a link quality evaluation parameter used to evaluate a link status may be configured on each node, so that each node can determine a link status of a link based on the link quality evaluation parameter. In an example implementation, link quality evaluation parameters configured on each node may include RSRP, an SINR, and a CQI. In another example implementation, link quality evaluation parameters configured on each node may include a first parameter and a second parameter. The first parameter is a link quality evaluation parameter calculated based on RSRQ and an RSSI, and the second parameter is a link quality evaluation parameter calculated based on an SINR and a CQI.

(4) In an aspect of this embodiment, any one or more links on the first path are interrupted.

Interruption of a link is specifically the following several cases: 1. The link is blocked. 2. A radio link failure (RLF) occurs on the link. 3. A beam failure (beam failure) occurs on all available beams (beam) on the link. 4. A quantity of retransmissions at a MAC layer of an end node on the link reaches a maximum value. 5. In an RLC acknowledgment mode (acknowledgement mode, AM for short), a quantity of retransmissions at an RLC layer of an end node on the link reaches a maximum value.

It should be noted that the link interruption may be uplink interruption or downlink interruption. For example, if a node A is a parent node of a node B, and a data packet is an uplink data packet, when a quantity of retransmissions of the data packet at an RLC layer of the node B reaches a maximum value, the node B may determine that an uplink between the node A and the node B is interrupted. If a node A is a parent node of a node B, and a data packet is a downlink data packet, when a quantity of retransmissions of the data packet at an RLC layer of the node A reaches a maximum value, the node A may determine that a downlink between the node A and the node B is interrupted.

The first node may determine whether an uplink and/or a downlink between the first node and another node is interrupted, and may further receive information indicating whether an uplink and/or a downlink between other nodes is interrupted.

For example, based on the network architecture shown in FIG. 1, the IAB node 1 may determine whether the downlink between the IAB node 2 and the IAB node 1 and the downlink between the IAB node 3 and the IAB node 1 are interrupted. The IAB node 1 may further receive information that is determined by the IAB node 2 and the IAB node 3 and that indicates whether the uplink between the IAB node 2 and the IAB node 1 and the uplink between the IAB node 3 and the IAB node 1 are interrupted. The IAB node 1 may further receive information that is determined by the IAB node 2 and the IAB node 3 and that indicates whether the downlink between the IAB node 2 and the IAB node 4 and the downlink between the IAB node 3 and the IAB node 4 are interrupted. Further, the IAB node 1 may receive information that is determined by the IAB node 4 and that indicates whether the uplink between the IAB node 2 and the IAB node 4 and the uplink between the IAB node 3 and the IAB node 4 are interrupted.

When the first node changes a path based on the path change condition and any link on the first path is interrupted, the first node may change the data packet from the first path to another path for transmission, to ensure that the data packet can be correctly and effectively transmitted.

(5) An example for understanding, the first node has received a path change instruction, where the path change instruction is used to instruct to change a transmission path of the data packet.

When the first node determines, based on the path change condition (5), whether to change a path, optionally, the method further includes: sending, by a fifth node, the path change instruction to the first node. Correspondingly, the first node receives the path change instruction from the fifth node.

The fifth node may be a node on the first path, and may directly send the path change instruction to the first node, or may send the path change instruction to the first node via one or more other nodes.

Specifically, the fifth node may send the path change instruction to the first node by using an F1AP layer peered to that of the fifth node. Correspondingly, the first node may receive the path change instruction from the fifth node at the F1AP layer of the first node by using the F1AP layer peered to that of the first node. The first node and the fifth node each may have a peer F1AP layer.

Roles of the fifth node and the first node in the network may be as follows:
Case 1: The first node is a donor node, a CU of a donor node, or a DU of a donor node, the data packet is a downlink data packet, and the fifth node is a downstream node of the first node on the first path.
Case 2: The first node is a wireless backhaul node, and the fifth node is a downstream node of the first node on the first path.
   In case 1 and case 2, the fifth node may send the path change instruction to the first node when determining that one or more links on a path between the fifth node and a destination node of the data packet are congested or interrupted. Alternatively, after receiving the path change instruction sent by another node (for example, the donor node or the CU of the donor node), if the fifth node determines, according to the path change instruction, that the first node also needs to change a path, the fifth node may send the path change instruction to the first node.
Case 3: The first node is a DU of a donor node, the data packet is a downlink data packet, and the fifth node is a CU of the donor node.
Case 4: The first node is a wireless backhaul node, and the fifth node is the donor node or the CU of the donor node.

When changing the path based on the path change condition, the first node changes the path according to an instruction of another node. In one case, the fifth node is a donor node or a CU of a donor node, and the donor node or a CU of the donor node can obtain a status of each link in the network. Therefore, the fifth node can accurately instruct the first node to change the path, to ensure correct transmission of the data packet. In another case, the fifth node is a downstream node of the first node on the first path. When learning of a poor link status of a link on the first path, the downstream node may directly send the path change instruction to the first node to instruct the first node to change the path, so as to ensure correct transmission of the data packet.

Optionally, the path change condition further includes at least one of the following conditions:

(6) An example for understanding, the data packet is an uplink data packet, and the first node has obtained, within a second preset time period, a scheduling resource allocated by a second next-hop node, where the second next-hop node is a next-hop node of the first node on the second path.

(7) An example for understanding, a total data volume of data packets that are buffered in the first node and that are to be sent to the second next-hop node is less than or equal to a second preset value.

(8) An example for understanding, at least one link quality evaluation parameter of each link on the second path is greater than or equal to a corresponding preset value.

It should be noted that the at least one link quality evaluation parameter in the path change condition (8) may be the same as or different from the at least one link quality evaluation parameter in the path change condition (3), and the preset value corresponding to the at least one link quality evaluation parameter in the path change condition (8) may be the same as or different from the preset value corresponding to the at least one link quality evaluation parameter in the path change condition (3).

(9) None of the links on the second path is interrupted.

A method for determining, by the first node, whether the path change conditions (6), (7), (8), and (9) are met is the same as the method for determining whether the path change conditions (1), (2), (3), and (4) are met, and details are not described herein again.

By determining whether the path change conditions (6), (7), (8), and (9) are met, the first node may further determine a link status of a link on the second path. When a link status of each link on the second path is good, the first node sends the data packet to the second node through the second path, to ensure correct transmission of the data packet. Further, the first node may further select the second path from a plurality of paths between the first node and the second node by determining whether the path meets the path change conditions (6), (7), (8), and (9) (in other words, a path in the plurality of paths that meets the path change conditions (6), (7), (8), and (9) is the second path).

In the foregoing embodiments, the first preset time period, the second preset time period, the first preset value, the second preset value, and the preset value corresponding to the link quality evaluation parameter may be set based on an actual application scenario. The first preset time period and the second preset time period may be the same or may be different, and the first preset value and the second preset value may be the same or may be different.

The data packet in the embodiments of this application includes a payload and a protocol layer header. The protocol layer header includes an identifier of a destination node and/or a path label. The identifier of the destination node is used to identify the destination node of the data packet, and the path label is used to identify a transmission path of the data packet.

If the data packet carries only the identifier of the destination node, the first node performs route selection based on the identifier of the destination node and a maintained route mapping table. The first node does not need to change the data packet, and only needs to send the data packet to the destination node via the second next-hop node.

If the data packet carries the path label, when performing path change, the first node may replace the carried path label with a path label corresponding to a path (namely, the second path) after the path change, and then send the data packet to the destination node via the second next-hop node. Alternatively, the first node encapsulates a path label corresponding to the second path in addition to the original path label, and then sends the data packet to the destination node via the second next-hop node.

According to the method provided in this embodiment of this application, when determining that the path change condition is met, the first node sends a data packet to the second node through the second path, so that a flexible routing capability provided in a multi-connection scenario of an IAB network can be fully used. When a data packet cannot be transmitted through one path, the data packet is transmitted through another path, thereby improving data packet transmission efficiency and network reliability.

The first node is the wireless backhaul node or a DU of the donor node, and the method further includes the following steps:
(11) The first wireless device sends configuration information to the first node, where the configuration information includes the path change condition and/or the route mapping table.

When the first node is the wireless backhaul node, the first wireless device is the donor node or a CU of the donor node; or when the first node is the DU of the donor node, the first wireless device is a CU of the donor node. The first wireless device may directly send the configuration information to the first node, or may send the configuration information to the first node via another node (for example, an IAB node).

The route mapping table is used by the first node to determine a next-hop node that receives the data packet, and the path change condition is used by the first node to determine whether to change a path.

The path change condition and the route mapping table in the first node may be configured separately, or may be configured together. In addition, the path change condition and the route mapping table may alternatively be preconfigured in the first node. For example, when the configuration information includes the path change condition, the route mapping table may be preconfigured in the first node; or when the configuration information includes the route mapping table, the path change condition may be preconfigured in the first node.

(12) The first node receives the configuration information from the first wireless device.

After step (12), the first node may determine, based on the route mapping table, a next-hop node that receives the data packet, and determine, based on the path change condition, whether to change the path.

During specific implementation, step (11) may include: sending, by the first wireless device, the configuration information to the first node by using a first protocol layer peered to that of the first wireless device. Correspondingly, during specific implementation, step (12) may include: receiving, by the first node, the configuration information from the first wireless device at the first protocol layer of the first node by using the first protocol layer peered to that of the first node.

In this case, the first wireless device and the first node each have a peer first protocol layer.

The first protocol layer may have the following several cases:
Case (1): The first protocol layer has at least one of the following capabilities: adding, to a data packet, routing information identifiable to the first node, performing route selection based on the routing information identifiable to the first node, adding, to a data packet, identification information that is related to a QoS requirement and that is identifiable to the first node, performing QoS mapping for a data packet on a plurality of links including the first node, adding data packet type indication information to a data packet, and sending flow control feedback information to a node having a flow control capability.
   In this case, the first protocol layer is the foregoing BAP layer.
Case (2): The first protocol layer is configured to carry a control plane message between the first node and the first wireless device, where the control plane message includes at least one of the following messages: a message related to management of an interface between the first node and the first wireless device, a message related to a configuration update of the interface between the first node and the first wireless device, a context configuration message related to a subnode of the first node, and a message including a message container that carries an RRC message of the subnode of the first node.
   In this case, when one of the first node and the first wireless device is the CU of the donor node, and the other is the DU of the donor node, the first protocol layer may be the foregoing F1AP layer. When one of the first node and the first wireless device is the wireless backhaul node and the other is the donor node, the first protocol layer may be the foregoing T1AP layer. When one of the first node and the first wireless device is the wireless backhaul node and the other is the CU of the donor node, the first protocol layer may be the foregoing T1AP layer or F1AP layer.
Case (3): The first protocol layer is an RRC layer.

Optionally, after step (12), the method may further include: sending, by the first node, a configuration response to the first wireless device, where the configuration response is used to indicate that the path change condition and/or the route mapping table configuration is completed/fails/is partially completed. Correspondingly, the first wireless device receives the configuration response from the first node, and determines, based on the configuration response, that configuration of the path change condition of the first node and/or of the route mapping table is completed/fails/is partially completed.

Optionally, before step 702, the method further includes the following step:

(21) The first node removes first routing information carried in the data packet, where the first routing information is used to indicate at least one third node through which the data packet passes, and the third node is an upstream node of the first node. In this case, during specific implementation, step 702 may include: changing, by the first node, from the first path to the second path to send, to the second node, the data packet from which the first routing information is removed.

The first routing information may be a part of the routing information carried in the data packet. In the optional method, the first node can remove routing information that is invalid for a downstream node, thereby improving data packet transmission efficiency. Certainly, the first node may alternatively not remove any routing information. Instead, and the last node transmitting the data packet removes all routing information of the data packet.

For example, based on the network architecture shown in FIG. 1, if the first node is the IAB node 1, when the donor node adds three pieces of routing information (which are a path label 1 (a transmission path specified by the path label 1 is: the donor node→the IAB node 1), the identifier of the IAB node 4, and the identifier of the terminal 1) to the data packet, the IAB node 1 may remove the path label 1 when processing a downlink data packet.

Optionally, before step 702, the method further includes the following step:

(31) The first node adds second routing information to the data packet, where the second routing information is used to indicate at least one fourth node through which the data packet passes, and the fourth node is a downstream node of the first node. In this case, during specific implementation, step 702 may include: changing, by the first node, from the first path to the second path to send, to the second node, the data packet to which the second routing information is added.

The first node may alternatively add routing information to the data packet, so that a subsequent node forwards the data packet based on the routing information.

For example, based on the network architecture shown in FIG. 1, if the first node is the IAB node 1, when the donor node adds three pieces of routing information (which are the path label 1, the identifier of the IAB node 4, and the identifier of the terminal 1) to the data packet, the IAB node 1 may add a path label 2 to the data packet, where a transmission path specified by the path label 2 is: the IAB node 1→the IAB node 2→the IAB node 4.

During specific implementation of the foregoing embodiment, to enable the first node to have a capability of sending a data packet to the second node through a plurality of paths, one or more standby links between the first node and a next-hop node may be configured on the first node. This may be specifically implemented in the following two manners:
Manner 1: When a data packet is forwarded based on the destination node namely, the second node), and a plurality of paths between the first node and the destination node include a plurality of next-hop nodes of the first node, a plurality of next-hop nodes (namely, the plurality of next-hop nodes of the first node) corresponding to the destination node may be configured in the route mapping table of the first node. In other words, when forwarding the data packet based on the route mapping table, the first node may send the data packet to the destination node via the plurality of next-hop nodes.

For example, based on the network architecture shown in FIG. 1, if the first node is the IAB node 1, and when the destination node is the IAB node 4, the terminal 1, or the terminal 2, the plurality of paths between the first node and the destination node include two next-hop nodes of the first node, which are the IAB node 2 and the IAB node 3. Therefore, the plurality of next-hop nodes corresponding to the destination node that are configured in the route mapping table of the first node are the IAB node 2 and the IAB node 3. For details, refer to Table 1.

**Table 1**

| Source node (optional) | Destination node | Next-hop node | Priority (optional) | QoS label (optional) |
|---|---|---|---|---|
| Donor node | IAB node 4 or terminal 1 | IAB node 2 | 1 | QoS label 1 |
| | | IAB node 3 | 2 | Other QoS labels |
| Donor node | Terminal 2 | IAB node 2 | 2 | QoS label 2 |
| | | IAB node 3 | 1 | Other QoS labels |

Optionally, priorities of the plurality of next-hop nodes corresponding to the source node and the destination node of the data packet and QoS labels of the plurality of next-hop nodes corresponding to the destination node may further be configured in the route mapping table of the first node.

A priority of a next-hop node is used to indicate a priority order of selecting the next-hop node by the first node. The first node preferentially selects a next-hop node with a higher priority to send the data packet to the destination node. For example, referring to Table 1, when the destination node is the IAB node 4, the first node may select two next-hop nodes: the IAB node 2 and the IAB node 3, and priorities corresponding to the IAB node 2 and the IAB node 3 may be set to 1 and 2 respectively. When a smaller priority value indicates a higher priority, the first node preferentially selects the IAB node 2 to send the data packet to the destination node.

It should be noted that when the destination node corresponds to only one next-hop node, or priorities of the plurality of next-hop nodes corresponding to the destination node are the same, a field used to indicate the priorities of the next-hop nodes may not be configured in the route mapping table of the first node.

A QoS label corresponding to a next-hop node is used to indicate the first node to send, to the next-hop node, a data packet that meets a QoS requirement corresponding to the QoS label.

Manner 2: When a data packet is forwarded based on a path label, and a plurality of paths between the first node and the destination node include a plurality of next-hop nodes of the first node, a plurality of next-hop nodes (namely, the plurality of next-hop nodes of the first node) corresponding to the path label may be configured in the route mapping table of the first node. In other words, when forwarding the data packet based on the route mapping table, the first node may send the data packet to the destination node via the plurality of next-hop nodes.

In an example, based on the network architecture shown in FIG. 1, for a downlink data packet, the donor node may define five path labels that are used to identify five different transmission paths from the donor node to the terminal. The transmission paths specified by the five path labels are as follows:
The transmission path specified by the path label 1 is: the donor node→the IAB node 1→the IAB node 3→the IAB node 4→the terminal 1.
The transmission path specified by the path label 2 is: the donor node→the IAB node 1→the IAB node 2→the IAB node 4→the terminal 1.
The transmission path specified by the path label 3 is: the donor node→the IAB node 1→the IAB node 3→the IAB node 4→the terminal 2.
The transmission path specified by the path label 4 is: the donor node→the IAB node 1→the IAB node 2→the IAB node 4→the terminal 2.
The transmission path specified by the path label 5 is: the donor node→the IAB node 1→the IAB node 2→the IAB node 5→the terminal 2.

If the first node is the IAB node 1, a path label of a main path and a corresponding next-hop node may be configured in the route mapping table of the first node, and a path label of a standby path and a corresponding next-hop node may further be configured in the route mapping table of the first node. For details, refer to Table 2.

**Table 2**

| Path label of the main path | Next-hop node (optional) | Path label of a standby path 1 | Next-hop node (optional) | Path label of a standby path 2 | Next-hop node (optional) |
|---|---|---|---|---|---|
| Path label 1 | IAB node 3 | Path label 2 | IAB node 2 | None | None |
| Path label 3 | IAB node 3 | Path label 4 | IAB node 2 | Path label 5 | IAB node 2 |

The path label of the main path and the corresponding next-hop node may be referred to as main path information, and the path label of the standby path and the corresponding next-hop node may be referred to as standby path information.

In another example, based on the network architecture shown in FIG. 1, the donor node may further define three path labels that are used to identify three different transmission paths between the donor node and the IAB node 4 and between the donor node and the IAB node 5. The transmission paths specified by the three path labels are as follows:
The transmission path specified by the path label 1 is: the donor node→the IAB node 1→the IAB node 3→the IAB node 4.
The transmission path specified by the path label 2 is: the donor node→the IAB node 1→the IAB node 2→the IAB node 4.
The transmission path specified by the path label 3 is: the donor node→the IAB node 1→the IAB node 2→the IAB node 5.

If the first node is the IAB node 1, a path label of a main path and a corresponding next-hop node may be configured in the route mapping table of the first node, and a path label of a standby path and a corresponding next-hop node may further be configured in the route mapping table of the first node. For details, refer to Table 3.

**Table 3**

| Path label of the main path | Next-hop node (optional) | Path label of the standby path | Next-hop node (optional) |
|---|---|---|---|
| Path label 1 | IAB node 3 | Path label 2 | IAB node 2 |
| Path label 3 | IAB node 2 | None | None |

It should be noted that the foregoing path label is described by using a path label defined for a downlink data packet as an example. The donor node may also define a path label for an uplink data packet, a path label for an uplink data packet or a downlink data packet between nodes within a service range of two donor nodes, or the like.

An embodiment of this application further provides a data packet processing method. A node in this embodiment and the node in the foregoing embodiment may be a same node, or may be different nodes. As shown in FIG. 8, the method includes the following steps.

801. A network device obtains a data packet.

When the network device is a donor node or a CU of a donor node, the data packet is a downlink data packet. When the network device is a wireless backhaul node providing a wireless backhaul service for a terminal, the data packet is an uplink data packet.

When a destination node of the data packet is the wireless backhaul node, a payload of the data packet may be a T1AP message (where in this case, the destination node serves as a DU in a network, and for example, the destination node may be a DU of an IAB node). Alternatively, a payload of the data packet may be user plane data or an RRC message (where in this case, a second node serves as a terminal in a network, and for example, the second node may be an MT of an IAB node).

When the destination node of the data packet is the terminal, a payload of the data packet may be user plane data or an RRC message. In this case, the network device may send the data packet to the terminal via the wireless backhaul node accessed by the terminal. A data packet received by the wireless backhaul node may be a BAP PDU. The wireless backhaul node sends a PDCP PDU in the BAP PDU to the terminal, and the PDCP PDU includes user plane data of the terminal or an RRC message of the terminal.

802. The network device adds routing information to the data packet, where the routing information includes some nodes through which the data packet passes, a plurality of transmission paths between the network device and the destination node of the data packet include the some nodes, and at least two of the plurality of transmission paths include a public node and links between the public node and a plurality of next-hop nodes of the public node.

Specifically, the network device may add a plurality of pieces of routing information to the data packet, and the plurality of pieces of routing information include the some nodes through which the data packet passes. The routing information may include a path label and/or a node identifier. For example, the routing information (or routing information content) may include the destination node of the data packet and some wireless backhaul nodes on a transmission path.

The data packet may include a payload and a protocol layer header. After step 802, the protocol layer header of the data packet may include one or more of the following information: a quantity of pieces of routing information (used to indicate a quantity of pieces of the added routing information), a routing information type (used to indicate a type of the added routing information, for example, a path label or a node identifier), a routing information length (used to indicate the length of the added routing information, where the length may be in unit of bit), and routing information content (used to indicate specific routing information). For example, the foregoing information may be carried in BAP layer header information of the data packet.

803. The network device sends the data packet to a sixth node.

The sixth node is a public node included in any two of the plurality of transmission paths, and the two transmission paths further include links between the sixth node and a plurality of next-hop nodes of the sixth node.

The network device may directly send the data packet to the sixth node, or may send the data packet to the sixth node via one or more nodes.

Optionally, the method shown in FIG. 8 further includes the following step 804.

804. The sixth node receives the data packet from the network device, selects a seventh node from the plurality of next-hop nodes based on the routing information carried in the data packet, and sends the data packet to the seventh node.

In the method shown in FIG. 8, the routing information added by the network device to the data packet does not specify a determined transmission path. In this case, the public node can select a next-hop node as required by using the method shown in FIG. 8. Certainly, the routing information added by the network device to the data packet may alternatively specify a determined transmission path. In this case, each node on the transmission path performs data routing based on the routing information. Details are not described herein.

Further, the sixth node may select the seventh node from the plurality of next-hop nodes based on a routing policy and the routing information that is carried in the data packet. The routing policy may include a route mapping table and one or more of the foregoing path change conditions, or may be another routing policy. The sixth node may determine the plurality of next-hop nodes based on the route mapping table in the routing policy, and then determine the seventh node from the plurality of next-hop nodes based on the one or more path change conditions in the routing policy.

In a possible implementation, if the sixth node has determined the plurality of next-hop nodes based on the route mapping table in the routing policy, when the sixth node determines that all path change conditions in the routing policy are met, the sixth node may send the data packet to the destination node of the data packet via a next-hop node (namely, the seventh node) of the sixth node on a standby path. When the sixth node determines that any path change condition in the routing policy is not met, the sixth node may send the data packet to the destination node of the data packet via a next-hop node (namely, the seventh node) of the sixth node on a main path.

In another possible implementation, if the sixth node has determined the plurality of next-hop nodes based on the route mapping table in the routing policy, when the sixth node determines that any path change condition in the routing policy is met, the sixth node may send the data packet to the destination node of the data packet via a next-hop node (namely, the seventh node) of the sixth node on a standby path. When the sixth node determines that none of path change conditions in the routing policy is met, the sixth node may send the data packet to the destination node of the data packet via a next-hop node (namely, the seventh node) of the sixth node on a main path.

Both the standby path and the main path are paths between the sixth node and the destination node of the data packet. For example, when the first node and the sixth node are a same node, and the destination node of the data packet is the second node, the main path may be the foregoing first path, and the standby path may be the foregoing second path. The path change condition may include one or more of the path change conditions (1) to (9) in the embodiment described in FIG. 7.

Using the network architecture shown in FIG. 1 as an example, a process in which the donor node adds the routing information to the downlink data packet that needs to be sent to the terminal 1 is as follows:
The donor node adds three pieces of routing information to the data packet, namely, the path label 1, the identifier of the IAB node 4, and the identifier of the terminal 1. The transmission path specified by the path label 1 is: the donor node→the IAB node 1.

The donor node sends the downlink data packet to the IAB node 1 based on the path label 1. The IAB node 1 selects one node from the IAB node 2 and the IAB node 3 based on the routing policy and the identifier of the IAB node 4, and sends the downlink data packet to the IAB node 4 via the node. After receiving the downlink data packet, the IAB node 4 sends the downlink data packet to the terminal 1.

Optionally, before the sixth node sends the data packet to the seventh node, the method further includes the following step:

(41) The sixth node removes third routing information carried in the data packet, where the third routing information is used to indicate at least one eighth node through which the data packet passes, and the eighth node is an upstream node of the sixth node. In this case, the sending, by the sixth node, the data packet to the seventh node includes: sending, by the sixth node to the seventh node, the data packet from which the third routing information is removed.

The third routing information may be a part of the routing information added by the network device to the data packet. In the optional method, the sixth node can remove routing information that is invalid for a downstream node, thereby improving data packet transmission efficiency. Certainly, the sixth node may alternatively not remove any routing information. Instead, the last node (for example, an IAB node accessed by the terminal, the donor node, or the DU of the donor node) transmitting the data packet removes all routing information of the data packet.

For example, based on the network architecture shown in FIG. 1, when the three pieces of routing information added by the donor node to the data packet are the path label 1, the identifier of the IAB node 4, and the identifier of the terminal 1, the IAB node 1 may remove the path label 1 when processing the downlink data packet,

Optionally, before the sixth node sends the data packet to the seventh node, the method further includes the following step:
(51) The sixth node adds fourth routing information to the data packet, where the fourth routing information is used to indicate at least one ninth node through which the data packet passes, and the ninth node is a downstream node of the sixth node. In this case, the sending, by the sixth node, the data packet to the seventh node includes: sending, by the sixth node to the seventh node, the data packet to which the fourth routing information is added.

The sixth node may alternatively add routing information to the data packet, so that a subsequent node forwards the data packet based on the routing information.

For example, based on the network architecture shown in FIG. 1, when the three pieces of routing information added by the donor node to the data packet are the path label 1, the identifier of the IAB node 4, and the identifier of the terminal 1, the IAB node 1 may add a path label 2 to the data packet, where a transmission path specified by the path label 2 may be: the IAB node 1→the IAB node 2→the IAB node 4.

According to the solutions provided in the embodiments of this application, the network device may add, to the data packet, the routing information used to indicate the plurality of transmission paths of the data packet, so that some forwarding nodes may autonomously select, based on the routing information, a transmission path for sending the data packet. In this way, flexible routing is implemented.

The foregoing mainly describes the solutions in the embodiments of this application from a perspective of interaction between the network elements. It may be understood that, to implement the foregoing functions, each network element, such as the first node, the fifth node, the first wireless device, the network device, or the sixth node, includes a corresponding hardware structure and/or software module for performing each function. A person skilled in the art should be easily aware that, in combination with the examples of units and algorithm steps described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that such an implementation goes beyond the scope of this application.

In the embodiments of this application, the first node, the fifth node, the first wireless device, the network device, the sixth node, or the like may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that the unit division in the embodiments of this application is an example, and is merely logical function division. There may be another division manner during actual implementation.

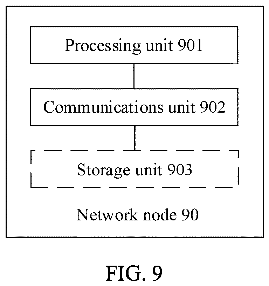

When an integrated unit is used, FIG. 9 is a possible schematic structural diagram of a network node 90 in the foregoing embodiments. The network node 90 includes a processing unit 901 and a communications unit 902, and may further include a storage unit 903. The schematic structural diagram shown in FIG. 9 may be used to indicate a structure of the first node, the fifth node, the first wireless device, the network device, or the sixth node in the foregoing embodiments.

When the schematic structural diagram shown in FIG. 9 is used to indicate the structure of the first node in the foregoing embodiments, the processing unit 901 is configured to control and manage an action of the first node. For example, the processing unit 901 is configured to support the first node in performing processes 701 to 703 in FIG. 7 and/or an action performed by the first node in another process described in the embodiments of this application. The communications unit 902 is configured to support the first node in communicating with another network entity, for example, communicating with the second node shown in FIG. 7. The storage unit 903 is configured to store program code and data of the first node.

When the schematic structural diagram shown in FIG. 9 is used to indicate the structure of the network device in the foregoing embodiments, the processing unit 901 is configured to control and manage an action of the network device. For example, the processing unit 901 is configured to support the network device in performing processes 801 to 803 in FIG. 8 and/or an action performed by the network device in another process described in the embodiments of this application. The communications unit 902 is configured to support the network device in communicating with another network entity, for example, communicating with the sixth node shown in FIG. 8. The storage unit 903 is configured to store program code and data of the network device.

When the schematic structural diagram shown in FIG. 9 is used to indicate the structure of the sixth node in the foregoing embodiments, the processing unit 901 is configured to control and manage an action of the sixth node. For example, the processing unit 901 is configured to support the sixth node in performing process 804 in FIG. 8 and/or an action performed by the sixth node in another process described in the embodiments of this application. The communications unit 902 is configured to support the sixth node in communicating with another network entity, for example, communicating with the network device shown in FIG. 8. The storage unit 903 is configured to store program code and data of the sixth node.

When the schematic structural diagram shown in FIG. 9 is used to indicate the structure of the fifth node in the foregoing embodiments, the processing unit 901 is configured to control and manage an action of the fifth node. For example, the processing unit 901 is configured to support the fifth node in performing an action performed by the fifth node in the process described in the embodiments of this application. The communications unit 902 is configured to support the fifth node in communicating with another network entity, for example, communicating with the first node shown in FIG. 7. The storage unit 903 is configured to store program code and data of the fifth node.

When the schematic structural diagram shown in FIG. 9 is used to indicate the structure of the first wireless device in the foregoing embodiments, the processing unit 901 is configured to control and manage an action of the first wireless device. For example, the processing unit 901 is configured to support the first wireless device in performing an action performed by the first wireless device in the process described in the embodiments of this application. The communications unit 902 is configured to support the first wireless device in communicating with another network entity, for example, communicating with the first node shown in FIG. 7. The storage unit 903 is configured to store program code and data of the first wireless device.

The processing unit 901 may be a processor or a controller. The communications unit 902 may be a communications interface, a transceiver, a transceiver circuit, or the like. The communications interface is a collective term and may include one or more interfaces. The storage unit 903 may be a memory. When the processing unit 901 is a processor, the communications unit 902 is a communications interface, and the storage unit 903 is a memory, the network node 90 in this embodiment of this application may be the network node 20 shown in FIG. 2.

In this case, when the schematic structural diagram shown in FIG. 2 is used to indicate the structure of the first node in the foregoing embodiments, the processor 201 is configured to control and manage an action of the first node. For example, the processor 201 is configured to support the first node in performing processes 701 to 703 in FIG. 7 and/or an action performed by the first node in another process described in the embodiments of this application. The communications interface 204 is configured to support the first node in communicating with another network entity, for example, communicating with the second node shown in FIG. 7. The memory 203 is configured to store program code and data of the first node.

When the schematic structural diagram shown in FIG. 2 is used to indicate the structure of the network device in the foregoing embodiments, the processor 201 is configured to control and manage an action of the network device. For example, the processor 201 is configured to support the network device in performing processes 801 to 803 in FIG. 8 and/or an action performed by the network device in another process described in the embodiments of this application. The communications interface 204 is configured to support the network device in communicating with another network entity, for example, communicating with the sixth node shown in FIG. 8. The memory 203 is configured to store program code and data of the network device.

When the schematic structural diagram shown in FIG. 2 is used to indicate the structure of the sixth node in the foregoing embodiments, the processor 201 is configured to control and manage an action of the sixth node. For example, the processor 201 is configured to support the sixth node in performing process 804 in FIG. 8 and/or an action performed by the sixth node in another process described in the embodiments of this application. The communications interface 204 is configured to support the sixth node in communicating with another network entity, for example, communicating with the network device shown in FIG. 8. The memory 203 is configured to store program code and data of the sixth node.

When the schematic structural diagram shown in FIG. 2 is used to indicate the structure of the fifth node in the foregoing embodiments, the processor 201 is configured to control and manage an action of the fifth node. For example, the processor 201 is configured to support the fifth node in performing an action performed by the fifth node in the process described in the embodiments of this application. The communications interface 204 is configured to support the fifth node in communicating with another network entity, for example, communicating with the first node shown in FIG. 7. The memory 203 is configured to store program code and data of the fifth node.

When the schematic structural diagram shown in FIG. 2 is used to indicate the structure of the first wireless device in the foregoing embodiments, the processor 201 is configured to control and manage an action of the first wireless device. For example, the processor 201 is configured to support the first wireless device in performing an action performed by the first wireless device in the process described in the embodiments of this application. The communications interface 204 is configured to support the first wireless device in communicating with another network entity, for example, communicating with the first node shown in FIG. 7. The memory 203 is configured to store program code and data of the first wireless device.

An embodiment of this application further provides a computer-readable storage medium, including an instruction. When the instruction is run on a computer, the computer is enabled to perform the foregoing methods.

An embodiment of this application further provides a computer program product including an instruction. When the computer program product runs on a computer, the computer is enabled to perform the foregoing methods.

An embodiment of this application further provides an apparatus, and the apparatus exists in a product form of a chip. The apparatus includes a processor, a memory, and a transceiver component. The transceiver component includes an input/output circuit. The memory is configured to store a computer-executable instruction. The processor executes the computer-executable instruction stored in the memory, to implement the foregoing methods.

An embodiment of this application further provides a communications system, including at least a first node and a second node, and may further include a fifth node and/or a first wireless device.

An embodiment of this application further provides a communications system, including at least the foregoing network device and a sixth node.

All or some of the foregoing embodiments may be implemented by software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is obvious that various modifications and combinations may be made to them without departing from the scope of this application.

Clearly, a person skilled in the art can make various modifications and variations to this application without departing from the scope of this application, as defined by the appended set of claims.

## Claims

1. A path change method, applied to a radio access network, wherein the radio access network comprises a terminal, a wireless backhaul node, and a donor node; the wireless backhaul node is configured to provide a wireless backhaul service for a node wirelessly accessing the wireless backhaul node; the terminal communicates with the donor node via the wireless backhaul node; and the path change method comprises:
establishing(701), by a first node, a first path and a second path between the first node and a second node, wherein both the first node and the second node are nodes in the radio access network, and the first node is the wireless backhaul node, the donor node, or a distributed unit of the donor node;
sending(702), by the first node, a data packet to the second node through the first path; and
when the first node determines that a path change condition is met, changing(703), by the first node, from the first path to the second path to send the data packet to the second node, wherein the path change condition comprises a radio link failure, RLF, occurring on any one or more links on the first path the method being **characterised in that** the data packet comprises a payload and a protocol layer header, wherein the protocol layer header comprises an identifier of a destination node and a path label, the identifier of the destination node identifies the destination node of the data packet, and the path label identifies a transmission path of the data packet, wherein the transmission path of the data packet is the second path after the changing.

2. The path change method according to claim 1, wherein the path change condition further comprises that a RLF occurs on none of the links on the second path

3. The path change method according to claim 1 or 2, wherein the first node is the wireless backhaul node or the distributed unit of the donor node, and the path change method further comprises:
receiving, by the first node, configuration information from a first wireless device, wherein the configuration information comprises the path change condition and/or a route mapping table; the route mapping table is used by the first node to determine a next-hop node receiving the data packet; wherein the first node is the wireless backhaul node, the first wireless device is the donor node or a centralized unit of the donor node; oi wherein the first node is the distributed unit of the donor node, the first wireless device is a centralized unit of the donor node.

4. The path change method according to claim 3, wherein the route mapping table comprises a priority of the next-hop node and the priority of the next-hop node indicates a priority order of determine the next-hop node.

5. The path change method according to claim 3 or 4, wherein the receiving, by the first node, configuration information from a first wireless device comprises:
receiving, by the first node, the configuration information from the first wireless device at a first protocol layer of the first node by using a first protocol layer peered to that of the first node, wherein
the first protocol layer has at least one of the following capabilities: adding, to a data packet, routing information identifiable to the first node, performing route selection based on the routing information identifiable to the first node, adding, to a data packet, identification information that is related to a quality of service, QoS, requirement and that is identifiable to the first node, performing QoS mapping for a data packet on a link comprising the first node, adding data packet type indication information to a data packet, and sending flow control feedback information to a node having a flow control capability; or the first protocol layer is configured to carry a control plane message between the first node and the first wireless device, wherein the control plane message comprises at least one of the following messages: a message related to management of an interface between the first node and the first wireless device, a message related to a configuration update of the interface between the first node and the first wireless device, a context configuration message related to a subnode of the first node, and a message comprising a message container that carries a radio resource control, RRC, message of a subnode of the first node; or the first protocol layer is an RRC layer.

6. The path change method according to any one of claims 1 to 5, further comprising:
removing, by the first node, first routing information carried in the data packet, wherein the first routing information indicates at least one third node through which the data packet passes, and the third node is an upstream node of the first node; and
the changing, by the first node, from the first path to the second path to send the data packet to the second node comprises: changing, by the first node, from the first path to the second path to send, to the second node, the data packet from which the first routing information is removed.

7. The path change method according to any one of claims 1 to 6, further comprising:
adding, by the first node, second routing information to the data packet, wherein the second routing information indicates at least one fourth node through which the data packet passes, and the fourth node is a downstream node of the first node; and
the changing, by the first node, from the first path to the second path to send the data packet to the second node comprises: changing, by the first node, from the first path to the second path to send, to the second node, the data packet to which the second routing information is added.

8. An apparatus, which is configured to perform the method according to any one of claims 1 to 7.

9. A computer readable medium, comprising a memory having a program, wherein the program is executed by a processor to achieve the method according to any one of claims 1 to 7.

## Patentansprüche

1. Pfadwechselverfahren, das auf ein Funkzugangsnetzwerk angewendet wird, wobei das Funkzugangsnetzwerk ein Endgerät, einen drahtlosen "Backhaul"-Knoten und einen Geberknoten umfasst, wobei der drahtlose "Backhaul"-Knoten konfiguriert ist, um einen drahtlosen "Backhaul"-Dienst für einen Knoten bereitzustellen, der drahtlos auf den drahtlosen "Backhaul"-Knoten zugreift; wobei das Endgerät über den drahtlosen "Back-haul"-Knoten mit dem Geberknoten kommuniziert; und das Pfadwechselverfahren umfasst:
Aufbauen (701) eines ersten Pfads und eines zweiten Pfads zwischen dem ersten Knoten und einem zweiten Knoten durch einen ersten Knoten, wobei sowohl der erste Knoten als auch der zweite Knoten Knoten in dem Funkzugangsnetzwerk sind und der erste Knoten der drahtlose "Backhaul"-Knoten, der Geberknoten oder eine verteilte Einheit des Geberknotens ist;
Senden (702) eines Datenpakets an den zweiten Knoten über den ersten Pfad durch den ersten Knoten; und
wenn der erste Knoten bestimmt, dass eine Pfadwechselbedingung erfüllt ist, Wechseln (703) von dem ersten Pfad auf den zweiten Pfad durch den ersten Knoten, um das Datenpaket an den zweiten Knoten zu senden, wobei die Pfadwechselbedingung umfasst, dass ein Funkverbindungsfehler, RLF, an einer oder mehreren beliebigen Verbindungen auf dem ersten Pfad auftritt, wobei das Verfahren **dadurch gekennzeichnet ist, dass** das Datenpaket eine Nutzlast und einen Header der Protokollschicht umfasst, wobei der Header der Protokollschicht einen Identifikator eines Zielknotens und eine Pfadbezeichnung umfasst, wobei der Identifikator des Zielknotens den Zielknoten des Datenpakets identifiziert und die Pfadbezeichnung einen Übertragungspfad des Datenpakets identifiziert, wobei der Übertragungspfad des Datenpakets der zweite Pfad nach dem Wechsel ist.

2. Pfadwechselverfahren nach Anspruch 1, wobei die Pfadwechselbedingung des Weiteren umfasst, dass auf keiner der Verbindungen des zweiten Pfads ein RLF auftritt.

3. Pfadwechselverfahren nach Anspruch 1 oder 2, wobei der erste Knoten der drahtlose "Backhaul"-Knoten oder die verteilte Einheit des Geberknotens ist, und das Pfadwechselverfahren des Weiteren umfasst:
Empfangen von Konfigurationsinformation von einer ersten drahtlosen Vorrichtung durch den ersten Knoten, wobei die Konfigurationsinformation die Pfadwechselbedingung und/oder eine Routenzuordnungstabelle umfasst, wobei die Routenzuordnungstabelle durch den ersten Knoten verwendet wird, um einen Knoten der nächsten Teilstrecke zu bestimmen, der das Datenpaket empfängt; wobei der erste Knoten der drahtlose "Backhaul"-Knoten ist, die erste drahtlose Vorrichtung der Geberknoten oder eine zentralisierte Einheit des Geberknotens ist; oder wobei der erste Knoten die verteilte Einheit des Geberknotens ist, die erste drahtlose Vorrichtung eine zentralisierte Einheit des Geberknotens ist.

4. Pfadwechselverfahren nach Anspruch 3, wobei die Routenzuordnungstabelle eine Priorität des Knotens der nächsten Teilstrecke umfasst und die Priorität des Knotens der nächsten Teilstrecke eine Prioritätsreihenfolge der Bestimmung des Knotens der nächsten Teilstrecke angibt.

5. Pfadwechselverfahren nach Anspruch 3 oder 4, wobei das Empfangen von Konfigurationsinformation von einer ersten drahtlosen Vorrichtung durch den ersten Knoten umfasst:
Empfangen der Konfigurationsinformation von der ersten drahtlosen Vorrichtung an einer ersten Protokollschicht des ersten Knotens durch den ersten Knoten unter Verwendung einer ersten Protokollschicht, die als Peer zu jener des ersten Knotens fungiert, wobei
die erste Protokollschicht mindestens eine der folgenden Fähigkeiten aufweist: Zufügen von Routing-Information, die für den ersten Knoten identifizierbar ist, zu einem Datenpaket, Durchführen von Routenauswahl basierend auf der Routing-Information, die für den ersten Knoten identifizierbar ist, Zufügen von Identifikationsinformation, die eine Dienstqualitäts-, QoS, Anforderung betrifft und für den ersten Knoten identifizierbar ist, zu einem Datenpaket, Durchführen von QoS-Zuordnung für ein Datenpaket auf einer Verbindung, die den ersten Knoten umfasst, Zufügen von Information zur Angabe des Datenpakettyps zu einem Datenpaket, und Senden von Flussregelungsrückmeldeinformation an einen Knoten mit Flussregelungsfähigkeit; oder wobei die erste Protokollschicht konfiguriert ist, um eine Steuerebenennachricht zwischen dem ersten Knoten und der ersten drahtlosen Vorrichtung zu tragen, wobei die Steuerebenennachricht mindestens eine der folgenden Nachrichten umfasst: eine Nachricht, die Management einer Schnittstelle zwischen dem ersten Knoten und der ersten drahtlosen Vorrichtung betrifft, eine Nachricht, die eine Konfigurationsaktualisierung der Schnittstelle zwischen dem ersten Knoten und der ersten drahtlosen Vorrichtung betrifft, eine Kontextkonfigurationsnachricht, die einen Unterknoten des ersten Knotens betrifft, und eine Nachricht, die einen Nachrichten-Container umfasst, der eine "Radio Resource Control", RRC, Nachricht eines Unterknotens des ersten Knotens trägt; oder wobei die erste Protokollschicht eine RRC-Schicht ist.

6. Pfadwechselverfahren nach einem der Ansprüche 1 bis 5, des Weiteren umfassend:
Entfernen von erster Routing-Information, die in dem Datenpaket getragen wird, durch den ersten Knoten, wobei die erste Routing-Information mindestens einen dritten Knoten angibt, den das Datenpaket durchläuft, und wobei der dritte Knoten ein dem ersten Knoten vorgeordneter Knoten ist; und
der Wechsel von dem ersten Pfad zu dem zweiten Pfad, um das Datenpaket zu dem zweiten Knoten zu senden, durch den ersten Knoten umfasst: Wechsel von dem ersten Pfad zu dem zweiten Pfad durch den ersten Knoten, um das Datenpaket, aus dem die erste Routing-Information entfernt wurde, zu dem zweiten Knoten zu senden.

7. Pfadwechselverfahren nach einem der Ansprüche 1 bis 6, des Weiteren umfassend:
Zufügen von zweiter Routing-Information zu dem Datenpaket durch den ersten Knoten, wobei die zweite Routing-Information mindestens einen vierten Knoten angibt, den das Datenpaket durchläuft, und wobei der vierte Knoten ein dem ersten Knoten nachgeordneter Knoten ist; und
der Wechsel von dem ersten Pfad zu dem zweiten Pfad, um das Datenpaket zu dem zweiten Knoten zu senden, durch den ersten Knoten umfasst: Wechsel von dem ersten Pfad zu dem zweiten Pfad durch den ersten Knoten, um das Datenpaket, dem die zweite Routing-Information zugefügt wurde, zu dem zweiten Knoten zu senden.

8. Gerät, das konfiguriert ist, um das Verfahren nach einem der Ansprüche 1 bis 7 durchzuführen.

9. Computerlesbares Medium, umfassend einen Speicher, der ein Programm aufweist, wobei das Programm durch einen Prozessor ausgeführt wird, um das Verfahren gemäß einem der Ansprüche 1 bis 7 zu erreichen.

## Revendications

1. Procédé de changement de chemin, appliqué à un réseau d'accès radio, où le réseau d'accès radio comprend un terminal, un noeud de raccordement sans fil, et un noeud donneur ; le noeud de raccordement sans fil est configuré pour fournir un service de raccordement sans fil pour un noeud accédant sans fil au noeud de raccordement sans fil ; le terminal communique avec le noeud donneur par l'intermédiaire du noeud de raccordement sans fil ; et le procédé de changement de chemin comprend les étapes suivantes :
établir (701), par un premier noeud, un premier chemin et un deuxième chemin entre le premier noeud et un deuxième noeud, où le premier noeud et le deuxième noeud sont tous deux des noeuds dans le réseau d'accès radio, et le premier noeud est le noeud de raccordement sans fil, le noeud donneur ou une unité distribuée du noeud donneur ;
envoyer (702), par le premier noeud, un paquet de données au deuxième noeud par le premier chemin ; et
lorsque le premier noeud détermine qu'une condition de changement de chemin est satisfaite, changer (703), par le premier noeud, du premier chemin au deuxième chemin pour envoyer le paquet de données au deuxième noeud, où la condition de changement de chemin comprend une défaillance de liaison radio, RLF, survenant sur l'une quelconque ou plusieurs liaisons du premier chemin, le procédé étant **caractérisé en ce que** :
le paquet de données comprend une charge utile et un en-tête de couche de protocole, où l'en-tête de couche de protocole comprend un identifiant de noeud de destination et une étiquette de chemin, l'identifiant du noeud de destination identifiant le noeud de destination du paquet de données et l'étiquette de chemin identifiant un chemin de transmission du paquet de données, où le chemin de transmission du paquet de données est le deuxième chemin après le changement.

2. Procédé de changement de chemin selon la revendication 1, dans lequel la condition de changement de chemin comprend en outre qu'une RLF ne se produise sur aucune des liaisons du deuxième chemin.

3. Procédé de changement de chemin selon la revendication 1 ou la revendication 2, dans lequel le premier noeud est le noeud de raccordement sans fil ou l'unité distribuée du noeud donneur, et le procédé de changement de chemin comprend en outre l'étape suivante :
recevoir, par le premier noeud, des informations de configuration provenant d'un premier dispositif sans fil, où les informations de configuration comprennent la condition de changement de chemin et/ou une table de mappage d'itinéraire ; la table de mappage d'itinéraire est utilisée par le premier noeud pour déterminer un noeud de saut suivant recevant le paquet de données ; où le premier noeud est le noeud de raccordement sans fil, le premier dispositif sans fil est le noeud donneur ou une unité centralisée du noeud donneur ; ou dans lequel le premier noeud est l'unité distribuée du noeud donneur, le premier dispositif sans fil est une unité centralisée du noeud donneur.

4. Procédé de changement de chemin selon la revendication 3, dans lequel la table de mappage d'itinéraire comprend une priorité du noeud de saut suivant, et la priorité du noeud de saut suivant indique un ordre de priorité de détermination du noeud de saut suivant.

5. Procédé de changement de chemin selon la revendication 3 ou la revendication 4, dans lequel la réception, par le premier noeud, d'informations de configuration depuis un premier dispositif sans fil comprend :
la réception, par le premier noeud, des informations de configuration provenant du premier dispositif sans fil au niveau d'une première couche de protocole du premier noeud en utilisant une première couche de protocole jumelée à celle du premier noeud, où :
la première couche de protocole dispose au moins de l'une des capacités suivantes : ajouter, à un paquet de données, des informations de routage identifiables au premier noeud, effectuer une sélection d'itinéraire, sur la base des informations de routage identifiables, vers le premier noeud, ajouter, à un paquet de données, des informations d'identification liées à une exigence de qualité de service, QoS, et qui sont identifiables, au premier noeud, effectuer un mappage QoS pour un paquet de données sur une liaison comprenant le premier noeud, ajouter des informations d'indication de type de paquet de données à un paquet de données, et envoyer des informations de retour de contrôle de flux à un noeud disposant d'une capacité de contrôle de flux ; ou la première couche de protocole est configurée pour transporter un message de plan de contrôle entre le premier noeud et le premier dispositif sans fil, où le message de plan de contrôle comprend au moins l'un des messages suivants : un message relatif à la gestion d'une interface entre le premier noeud et le premier dispositif sans fil, un message relatif à une mise à jour de la configuration de l'interface entre le premier noeud et le premier dispositif sans fil, un message de configuration de contexte relatif à un sous-noeud du premier noeud, et un message comprenant un conteneur de message qui transporte un message de contrôle des ressources radio, RRC, d'un sous-noeud du premier noeud ; ou la première couche de protocole est une couche RRC.

6. Procédé de changement de chemin selon l'une quelconque des revendications 1 à 5, comprenant en outre :
la suppression, par le premier noeud, des premières informations de routage contenues dans le paquet de données, où les premières informations de routage indiquent au moins un troisième noeud par lequel passe le paquet de données, et le troisième noeud est un noeud en amont du premier noeud ; et
le changement, par le premier noeud, du premier chemin au deuxième chemin pour envoyer le paquet de données au deuxième noeud comprend : le changement, par le premier noeud, du premier chemin au deuxième chemin pour envoyer, au deuxième noeud, le paquet de données dont les premières informations de routage sont supprimées.

7. Procédé de changement de chemin selon l'une quelconque des revendications 1 à 6, comprenant en outre les étapes suivantes :
ajouter, par le premier noeud, des deuxièmes informations de routage au paquet de données, où les deuxièmes informations de routage indiquent au moins un quatrième noeud par lequel passe le paquet de données, et le quatrième noeud est un noeud en aval du premier noeud ; et
le changement, par le premier noeud, du premier chemin au deuxième chemin pour envoyer le paquet de données au deuxième noeud comprend : le changement, par le premier noeud, du premier chemin au deuxième chemin pour envoyer, au deuxième noeud, le paquet de données auquel les deuxièmes informations de routage sont ajoutées.

8. Appareil qui est configuré pour exécuter le procédé selon l'une quelconque des revendications 1 à 7.

9. Support lisible par ordinateur, comprenant une mémoire ayant un programme, où le programme est exécuté par un processeur pour réaliser le procédé selon l'une quelconque des revendications 1 à 7.
